(19) Europäisches Patentamt
European Patent Office
Office européen des brevets

(11) EP 1 521 198 A2

(12) EUROPEAN PATENT APPLICATION

(43) Date of publication:
06.04.2005 Bulletin 2005/14

(51) Int Cl.$^7$: G06F 17/60

(21) Application number: 04254008.8

(22) Date of filing: 02.07.2004

(84) Designated Contracting States:
AT BE BG CH CY CZ DE DK EE ES FI FR GB GR HU IE IT LI LU MC NL PL PT RO SE SI SK TR
Designated Extension States:
AL HR LT LV MK

(30) Priority: 03.10.2003 JP 2003345165

(71) Applicant: Hitachi, Ltd.
Chiyoda-ku, Tokyo (JP)

(72) Inventors:
- Matsumoto, Kazuhiko, Hitachi Ltd.
  Chiyoda-ku Tokyo 100-8220 (JP)
- Aritsuka, Toshiyuki, Hitachi Ltd.
  Chiyoda-ku Tokyo 100-8220 (JP)

(74) Representative: Calderbank, Thomas Roger et al
Mewburn Ellis LLP
York House
23 Kingsway
London WC2B 6HP (GB)

# (54) System for inventory management, ordering and order management

(57) A system which solves the problem of the prior arts that residual quantity cannot be reflected on the inventory and proper inventory management is difficult particularly when the places to use and store the products are different and thoroughly enables processes to the ordering management and support of purchase and moreover the order acceptance management in the order accepting side from residual quantity and inventory management for a plurality of products is provided. In the inventory management and ordering system and the ordering management system, residual quantity of products which changes with use and inventory of products to always keep the products in the available condition are placed under the management, the residual quantity data of products obtained through management of residual quantity is reflected on the inventory management and the ordering is executed on the basis of the inventory management to which the management of residual quantity is reflected.

FIG. 1

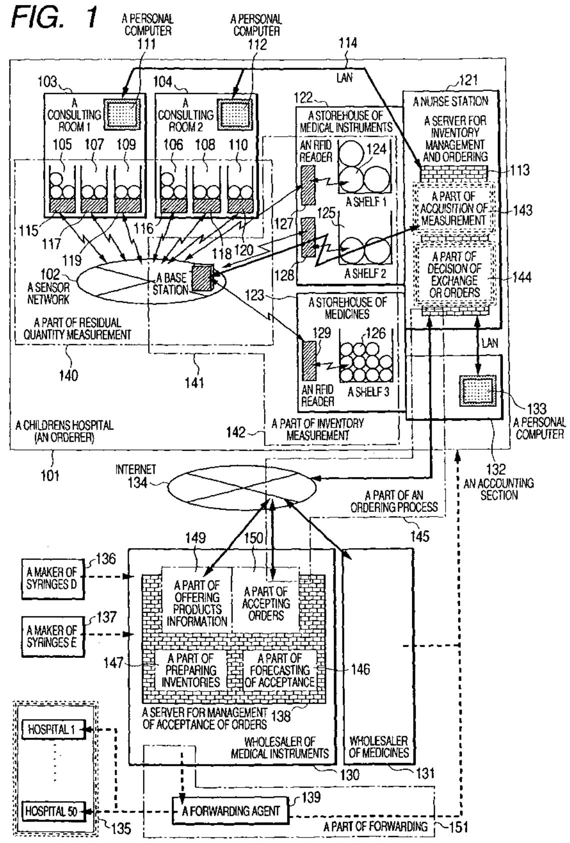


EP 1 521 198 A2

## Description

The present invention relates to a residual quantity/inventory management and order management/ purchase supporting system or expendables including commodities, particularly foods and moreover an order acceptance management system and particularly to a residual quantity/inventory management and order management/ purchase support system and order acceptance management system for expendables utilizing a sensor network.

With progress and spread of information technology in recent years, the Internet system has been widely introduced into ordinary households. Moreover, mobile units represented by mobile telephones are also widely spread, which are connected to the Internet. In addition, it is now a daily event to form a network of the radio LAN or the like within the family and office. Particularly, the RFID is also widely spreading for use in various application fields in place of the existing barcode. Moreover, flexibility in use is enhanced, in the field of sensor technology, with reduction in size, power consumption and provision of power generating mechanism.

As the technology for combining these factors, a sensor network (for example, refer to the non-patent document 1) may be considered. In this technology, a network is formed of various sensors to make communication among the sensors and between the sensors and RFIDs, and the sensing information is obtained in the base stations for making communication with such sensors and RFIDs and is then transmitted to a server in order to execute various processes. Particularly, the wireless sensor network for making wireless communication ensures easier installation and higher expandability because wiring is not required. The sensor network technology has mainly been researched for military use. However, recently, nonmilitary use thereof has also started. But, this sensor network system is now in the stage toward the practical application.

The methods of using the technology to form the sensor network technology described above include following contents.

In the method of using the Internet, inspection and acquisition of product information on the WEB, and ordering and purchasing of product through the mail-order selling system are now the daily events. Moreover, the personal computers and peripheral apparatuses in the households and offices are often used through the communication which has been realized by connection thereof with the radio LAN.

In use of the RFID, contents of RFID attached to each product stored in a storehouse are simultaneously read with a reader which can realize the wireless communication to easily perform the inventory management. Moreover, there is a movement to realize inventory management by attaching the RFID to the ordinary products in place of the barcode.

A sensor itself has already been used widely but when use of such sensor in the manner which can be clearly detected by consumers is considered, detection of residual quantity of expendables such as ink of printer is realized with the residual quantity detection sensor provided within the printer. Therefore, shortage of residual quantity is notified to a user. Moreover, monitoring of the residual quantity in an oil tank has also been performed using the sensors. Namely, the application field of the sensor network technology is in the trend to be more and more spreading.

In addition, there is also an example for the expendables to implement combination of the residual quantity and inventory management of ordering (for example, refer to the patent documents 1 and 2).

[Patent document 1] JP-A No. 296904/2000
[Patent document 2] JP-A No. 117298/2002

[Non-patent document 1]

Ian F. Akyildiz, et. al. "A Survey on Sensor Networks", IEEE Communication Magazine, pp. 102-114, August, 2002

As described above, an example of realizing ordering (order acceptance, viewed from the suppliers) of products (commodities), residual quantity management and inventory management or the like with use of the information technology (IT) is more and more increasing and therefore it is more important to realize flexible residual quantity/ inventory management system using the information technology. However, the existing residual quantity/ inventory management system for products has following problems.

The patent document 1 discloses an example of structure to execute inventory management and ordering of products (described as daily necessities in this document). In this document, products as the management object are placed under the management only within the particular storing boxes such as electric refrigerator and cupboard. Some products are provided with the RFID but the other are not provided with the RFID. In the case of the products provided with the RFID, a sensor (reader) attached within the storing box detects existence of products in the storing box, namely recognizes inventory. Meanwhile, in the case of products not provided with the RFID, the storing place of products in the storing box must be fixed. For example, if juice is placed in the place to store milk, juice is recognized as milk. In this fixed storing place, a weight sensor, for example, is set to measure the amount of inventory. However, in the case of this example, amount of inventory is considered to be equal to the residual quantity. In other words, amount, for example, weight at the designated storing place of product within the storing box is considered in direct as the amount of inventory but the inventory products placed in the external side of the storing box is never considered as the inventory. When the amount of inventory, namely the residual quantity is lowered exceeding the specified value, ordering is issued to a supplier.

As described above, the patent document 1 discloses the structure for performing the inventory management and ordering of products using sensors, but also has the problems that it is difficult to realize adequate inventory management considering the residual quantity of products because,

(1) products are placed under the management only within the particular storing box and therefore products placed in the external side of the storing box is never considered as the object of management, and
(2) discrimination is impossible for management of amount of inventory and residual quantity.

The patent document 2 also discloses an example of structure for inventory management and ordering of products (described as the expendables) . In this example, some of the products as the management object are also provided with the RFID but the other, not provided with the RFID. In the case of products provided with the RFID, a RFID reader is provided at the particular gateway, for example, at the entrance of house and the inventory management is executed in the house in accordance with the number of times of coming-in and going-out of the products. In other words, when amount of inventory is lowered exceeding the specified value, ordering is issued to a supplier. However, if a certain product is not wasted after use thereof, namely if a product is not placed in the external side of the house passing the entrance, this product is considered as a part of inventory. On the other hand, in the case of the products not provided with the RFID, the residual quantity is monitored using sensors. For example, amount of printer toner is measured with a sensor provided in the printer. When the residual quantity is lowered exceeding the specified value, ordering is executed to a supplier. However, even when inventory of toner for replacement is stored within the house, it is not considered as the conditions for the ordering. Namely, inventory of toner is not recognized in this case.

As described above, the structure of the patent document 2 performs inventory management and ordering of products using sensors but also has the problem that adequate inventory management considering the residual quantity of products is difficult because,

(1) when the inventory management is performed by detecting coming-in and going-out of the products, the number of products may be detected but residual quantity of products in use cannot be detected and particularly when a product is used, it is considered as the inventory unless it is wasted, making impossible the accurate detection of inventory, and
(2) amount of inventory is not reflected on the ordering in the case of inventory management on the basis of the residual quantity.

The technology disclosed in above two patent documents cannot reflect the residual quantity on the amount of inventory if the place use the product is different from the place to store the product and therefore cannot solve the problem that the adequate inventory management is difficult.

An object of the present invention is to solve the problems described above and to provide an inventory management and ordering system which can thoroughly execute various managements from residual quantity/ inventory management to the ordering management/support of purchasing of a plurality of products, particularly the expendables and moreover the order acceptance management in the order accepting side.

Another object of the present invention is to provide an inventory management and ordering system in which management for both residual quantity and amount of inventory is possible even when the place to use the products is different from the place to store the products, the ordering may be executed by considering both residual quantity and amount of inventory, high efficiency can be attained when the products are used in various places, adequate amount of inventory can always be acquired easily, and generation in excessive inventory and shortage of inventory can be prevented.

The other object of the present invention is to provide an inventory management and ordering system in which sensors or the like may be provided more easily by utilizing a wireless sensor network, procedures other than addition of new products as the object of management, installation of sensors for detecting residual quantity of products to the place to use, and registration of products to an ordering management server can be executed easily almost without intervention of an operator, and the inventory management of many products can be executed easily covering the scope from installation of sensors to the management and ordering.

A still another object of the present invention is to provide an inventory management and ordering system in which when a consumer makes the shopping without ordering to a supplier, a shopping list is generated, and when a consumer goes to make the shopping carrying a mobile terminal to which the shopping list is stored, the display areas of products may be found easily, and the shopping of the necessary products can always be executed.

The inventions among those disclosed by the present specification will be described briefly. Namely, the inventory management and ordering system of the present invention is characterized in that the management is performed for both residual quantity of products which changes depending on use thereof and inventory of the products to always keep the products in the available condition, the residual quantity data of the products obtained by the management of residual quantity is reflected on the inventory management, and the ordering is made on the basis of the inventory management on which the management of residual quantity is reflected.

The inventory management and ordering system described above is just suitable to the structure that the management of residual quantity of products and amount of inventory is performed using the sensor network, but the present invention is not limited thereto.

The present invention is just suitable to the structure that a sensor for monitoring residual quantity is used for the management of residual quantity and the residual quantity data detected with the sensor for monitoring residual quantity is reflected on the inventory management via the sensor network, but the present invention is not limited thereto.

The present invention is just suitable to the structure that a sensor for monitoring residual quantity is provided with a transceiver function to transmit by radio the detected residual quantity data to the external side and the sensor network also includes, as a node, the sensor for monitoring residual quantity having the radio transmission function, but the present invention is not limited thereto.

The power source of the sensor for monitoring residual quantity having the transceiver function may be supplied from an external power supply, or from a battery built in the sensor for monitoring residual quantity, or from a power unit having the power generating function by providing the power unit to the sensor for monitoring residual quantity.

The present invention is just suitable to the structure that the ordering of products is made on the basis of the residual quantity data obtained via the sensor network by using the RFID and the inventory data obtained from the RFID, but the present invention is not limited thereto.

The present invention is just suitable to the structure that the RFID has the transceiver function for transmitting by radio, to the external side, the information indicating existence of products as the basic information of the inventory data and the sensor network includes, as a node, the RFID having the transceiver function, but the present invention is not limited thereto.

The present invention is just suitable to the structure that the sensor for inventory management is used for the inventory management and the ordering is made on the basis of the residual quantity data obtained via the sensor network and the inventory data obtained with the sensor for inventory management, but the present invention is not limited thereto.

The present invention is just suitable to the structure that the sensor for inventory management has the transceiver function for transmitting by radio the detected inventory data to the external side and the sensor network includes as a node the sensor for inventory management having the transceiver function, but the present invention is not limited thereto.

The power source of the sensor for monitoring residual quantity having the transceiver function may be supplied from an external power supply, or from a battery built in the sensor for monitoring residual quantity, or from a power unit having the power generating function by providing the power unit to the sensor for inventory management.

The present invention is just suitable to the structure that the place to use the products and detect the residual quantity of the products is different from the place to store the products and to perform the inventory management of the products, but the present invention is not limited thereto.

The inventory management and ordering system of the present invention will be described more practically as follows. Namely, there is provided an inventory management and ordering system to perform the management of using conditions and inventory condition of a kind or more kinds of products using the sensor network and makes the ordering of products on the basis of such conditions, characterized in comprising a part of residual quantity measurement for measuring the using conditions of products, namely residual quantity or degree of deterioration of the products at the place to use the products or the period up to the consumption term, a part of inventory measurement for measuring the inventory conditions of products, namely amount of inventory at the place to store the products, a server for inventory management and ordering which can make communication with the base stations of the sensor network to obtain, for each product, the results of measurement of the using conditions and inventory conditions of products via the sensor network, a part of decision of exchange or order for deciding, in the inventory and ordering server, the necessity of supplement to the place to use or necessity of exchange and ordering at the place to use on the basis of the results of measurement of the using conditions and inventory conditions obtained with the server for inventory management and ordering, and a part of ordering process for exchanging the predetermined products or supporting the ordering or purchasing by the server for inventory management and ordering.

The present invention is just suitable to the structure that the part of residual quantity measurement measures, at the place to use the products or the place near to this place, the residual quantity or degree of deterioration of the products at the place to use or the period up to the consumption term using one or more sensors having the transceiver function, but the present invention is not limited thereto.

The present invention is just suitable to the structure that the part of inventory measurement measures amount of inventory for each product with any of the method for measurement using one or more sensors having the transceiver function provided at the place to use the products or the place near to this place and the method for measuring the predetermined information of the products written into the RFID having the transceiver function attached to the products with a reader having the transceiver function or the sensor having the transceiver function installed at the place to store or place near to this place, but the present invention is not limited thereto.

The server for inventory management and ordering for acquiring, for each product, the results of measurement of the using conditions and inventory conditions of the products is just suitable to the structure provided with a part of acquisition of measurement results which acquires accurate residual quantity and amount of inventory, for each product, by eliminating the duplicated measurement results during the particular measurement period in regard to the same product for the measurement results of the using conditions and inventory conditions of the products transmitted from the base stations of the sensor network and notifies the data to users when it is determined necessary to notify to the users the accurate residual quantity and amount of inventory acquired, but the present invention is not limited thereto.

The present invention is just suitable to the structure that the duplicated measurement results during the particular measurement period in the part of acquisition of measurement results are eliminated, when the measurement is executed with one or more sensors having the transceiver function provided at the place to store the products or at the place near to this place, by reading once and recognizing the ID individually attached to each product, when the same ID is read for a plurality of times, under the condition that the predetermined information of the products written into the RFID having the transceiver function attached to the product is measured, for each inherent ID of the sensor, using the reader having the transceiver function or the sensor having the transceiver function provided at the place to store or at the place near to this place, but the present invention is not limited thereto.

The present invention is just suitable to the structure that the part of residual quantity measurement selectively executes, for each product, the control to disable the transceiver function of the RFID when the RFID is provided at the place to use the products in the case where the RFID having the transceiver function is individually attached to the products, or the control to disable the transceiver function of the RFID when the package of product is opened in the case where the RFID having the transceiver function is attached in units of packages packing at a time one or two or more products, or the control to update the predetermined data of the RFID, without relation to the method of attaching the RFID to the product, so that the relevant product cannot be recognized as the inventory with a data writer when the use has been started, but the present invention is not limited thereto.

The present invention is just suitable to the structure that the part of decision of exchange or order decides necessity of supplement of product to the place to use and exchange thereof at the place to use by comparing the predetermined setting value of the residual quantity in the exchange period being stored in the server for inventory management and ordering with the residual quantity of products and then notifies determination of supplement or exchange to users when the measured residual quantity is lowered exceeding the predetermined setting value, or the part of decision of exchange or order decides necessity of ordering of products by comparing the predetermined setting value equal to the sum of the residual quantity in the ordering period being stored in the server for inventory management and ordering and the amount of inventory with the total value of the residual quantity and amount of inventory of the products and then notifies necessity of ordering to users when the total value of the measured residual quantity and amount of inventory is lowered exceeding the predetermined setting value, but the present invention is not limited thereto.

The present invention is just suitable to the structure that the setting value of the residual quantity value in the exchange period being stored in the server for inventory management and ordering uses, in the process to decide necessity of supplement of product to the place to use or exchange thereof at the place to use, any of the setting value preset for each product or the setting value predetermined freely by a user and also uses, in the process to decide necessity of ordering, any of the setting value predetermined for each product and the setting value predetermined freely by a user as the setting value of the total value of the residual quantity and amount of inventory in the ordering period being stored in the server for inventory management and ordering, but the present invention is characterized in that it is not limited thereto.

The present invention is just suitable to the structure that the part of decision of exchange or order executes the process to decide necessity of supplement of product to the place to use or exchange thereof at the place to use and further forecasts the period in which the residual quantity value becomes equal to or smaller than the predetermined setting value, namely the period in which supplement or exchange is required using the predetermined setting value of the residual quantity value in the exchange period being stored in the server for inventory management and ordering, residual quantity of the product and amount of use in unit of the particular time being stored in the server for inventory management and ordering, and then notifies such period to a user, but the present is not limited thereto.

The present invention is just suitable to the structure that the part of decision of exchange or order decides necessity of ordering of products and forecasts the period where the sum of the residual quantity and amount of inventory is equal to or lowered exceeding the predetermined setting value, namely the period where ordering is required using the predetermined setting value of the total of the residual quantity and amount of inventory in the ordering period being stored in the server for inventory management and ordering, the total value of the residual quantity and amount of inventory of the product and amount of use in unit of the particular time being stored in the server for inventory management and ordering and then notifies such period to a user, but the present invention is not limited thereto.

The present invention is just suitable to the structure that the part of decision of exchange or order decides necessity of ordering of products and forecasts the period where the total value of the residual quantity and amount of inventory becomes zero using the total value of the residual quantity and amount of inventory of product and amount of use in unit of the particular time in future being stored in the server for inventory management and ordering, and then notifies such period to a user, but the present invention is not limited thereto.

The present invention is just suitable to the structure that the result of measurement in amount of inventory and residual quantity in the part of acquisition of measurement result, result of decision of necessity of exchange and order in the part of decision of exchange or order, result of forecasting of the period for necessity of exchange in the part of decision of change or order, result of forecasting of the period of necessity of ordering in the part of decision of exchange or order, and result of forecasting of the period where the total value of the residual quantity and amount of inventory in the part of decision of exchange or order becomes zero (0) are notified to a user when the predetermined notification conditions being stored previously in the server for inventory management and ordering are satisfied and a user has issued the notification instruction to the server for inventory management and ordering irrespective of the predetermined notification conditions and moreover that the notification to user is executed using images or voices to a terminal which is connected to the server for inventory management and ordering or to a terminal which can make communication with the server for inventory management and ordering, but the present invention is not limited thereto.

The present invention is just suitable to the structure that an ordering destination of products in the part of ordering process is determined with any of the methods to select only one supplier being stored in the server for inventory management and ordering or to select only one or a plurality of suppliers satisfying the predetermined conditions from a plurality of suppliers being stored in the server for inventory management and ordering and to select only one or a plurality of suppliers from the suppliers who have obtained the predetermined product information through the Internet or the like in addition to the suppliers being stored in the server for inventory management and ordering, and moreover it is possible to send an instruction to the server for inventory management and ordering to make the ordering to the selected supplier so that the server for inventory management and ordering makes the ordering through the Internet, or a user makes the ordering from the server through the Internet on the basis of the predetermined product information obtained by the server for inventory management and ordering, or the server for inventory management and ordering gets permission from a person who admits the ordering and then the server for inventory management and ordering or the server in the side of the person who admits the ordering makes the ordering through the Internet, or the user obtains permission from the person who admits the ordering and the server for inventory management and ordering makes the ordering upon getting permission through the Internet, or the user does not make the ordering of the product, but the present invention is not limited thereto.

The present invention is just suitable to the structure that the supplier is selected considering the selecting conditions of an orderer by evaluating the predetermined product information, namely price of product, delivery (forwarding) date and services, but the present invention is not limited thereto.

The present invention is just suitable to the structure that in the part of ordering process, the server for ordering management acquires the predetermined product information via the Internet when a user purchases the product without ordering to a supplier and generates, for each product, a shopping list recording names of products, prices, and names of suppliers, while the user prints out the list via the server or receives the list with a mobile terminal or inputs the list to a storage medium, and when the user is going to make the shopping using the mobile terminal storing such shopping list, any one or both of the events that a product display area in the shop is notified to the user from the mobile terminal or a receiver in the shop receives the shopping list of the mobile terminal and a broadcaster installed at the product display area notifies the display area to the user, but the present invention is not limited thereto.

The ordering and order acceptance management system of the present invention is characterized in comprising an inventory management of ordering system to execute the management of using conditions and inventory conditions of one or more products and makes the ordering of products on the basis of these conditions and an order acceptance and forwarding management system for accepting orders of products and forwarding the products to orderers.

Particularly, the order acceptance and forwarding management system forming the order acceptance and ordering system will be described more practically as follows. Namely, this order acceptance and forwarding management system is characterized in comprising a part of forecasting of order acceptance for forecasting, for each orderer and product, the next order acceptance period and amount of order acceptance by storing the order acceptance conditions of product in the past for each orderer to the server for order acceptance management, a part of offering product information for notifying, to the orderers, the information of product related to the order-accepted products in the past and the present and future service conditions using the server for order accepter management on the basis of the stored result of the server for order acceptance management and the result of forecasting of the part of forecasting of order acceptance, a part of preparing inventory for acquiring the inventory of products on the basis of the result of forecasting of the part of forecasting of order acceptance, a part of accepting orders for accepting order of product from the orderers with the server for order acceptance management, and a part of forwarding products for demanding and receiving prices by forwarding, to the orderers, the products ordered from the orderers.

In regard to the order acceptance and ordering management system, the inventory management and ordering system forming the same system is capable of introducing various profiles as in the case of those described above, but the present invention is not limited thereto.

Moreover, the inventory management and ordering apparatus forming the inventory management and ordering system of the present invention for ordering of products on the basis of the using conditions and inventory conditions through management thereof of one or more kinds of products using the sensor network is characterized in comprising a part of residual quantity measurement for measuring the using conditions of product, namely residual quantity or degree of deterioration of product at the place to use or the period up to the consumption term, a part of inventory measurement for measuring the inventory conditions of product, namely amount of inventory at the storing place of product, a server for inventory management and ordering or acquiring the result of measurement of the using conditions and inventory conditions of products for each product via the sensor network by making communication with the base stations of the sensor network, a part of decision of exchange or order for deciding, in the server for inventory management and ordering, necessity of supplement to the place to use or necessity of exchange and ordering at the place to use, and a part of ordering for exchange of the predetermined products or for support of ordering or purchasing with the server for the inventory management and ordering on the basis of the result of decision.

According to an aspect of the present invention, a system for thoroughly executing various processes from residual quantity and inventory management of a plurality of products, particularly the expendables up to the ordering management and support of purchasing, moreover up to the order acceptance management in the order acceptance side can be realized by utilizing the sensor network.

First, if the place to use product is different from the place to store, management of both residual quantity and amount of inventory can be performed and ordering can also be realized considering both residual quantity and amount of inventory. The present invention can particularly be embodied effectively when a plurality of places to use are scattered. Accordingly, acquisition of inventory in the adequate amount can always be realized easily, resulting in the effect that the generation of excessive inventory and shortage of inventory can be prevented.

Moreover, use of the wireless sensor network surely makes easier the installation of sensors or the like. Furthermore, addition of new products as the management object and installation of sensor to the place to use for detection of residual quantity of the product can be made easily almost without necessity of manual operations, except for the process to register the products to the server for ordering management (only recognition of registration). Accordingly, the present invention provides the effect that the inventory management of many products can be made easily almost in the entire processes up to the management and ordering from installation of sensors.

The present invention also provides the effect that when a consumer makes the shopping without ordering to a supplier, a shopping list is generated, and when a consumer goes to make the shopping carrying a mobile terminal to which the shopping list is stored, the display areas of products may be found easily, and the shopping of the necessary products can always be made.

In the drawings:

Fig. 1 is an explanatory diagram of an inventory management and ordering system, and an ordering management and purchase supporting system and moreover order acceptance management system;
Fig. 2 is a diagram of process flow of inventory management and ordering, ordering management and purchase support and moreover order acceptance;
Fig. 3 is a diagram illustrating a structure of a wireless sensor network;
Fig. 4A is a structural diagram of a sensor (sensor network node);
Fig. 4B is a structural diagram of a base station;
Fig. 5 is a diagram illustrating a display example of residual quantity and amount of inventory;
Fig. 6 is a diagram illustrating a display example of the result of forecasting of the periods of supplement/exchange, ordering and zero inventory;
Fig. 7 is a diagram illustrating a display example of products which requires the ordering;
Fig. 8 is a diagram illustrating an display example of the additional process period of products which require the ordering or purchase;
Fig. 9 is a diagram illustrating a display example of a mobile terminal for the guidance to the shopping space; and

Fig. 10 is a diagram illustrating a display example of a mobile terminal for the products to be purchased.

The preferred embodiments of the present invention will be described with reference to the accompanying drawings. Prior to the detail description of the embodiments, a basic structure of a wireless sensor network will be described by referring to Fig. 3 and Figs. 4A and 4B. The wireless sensor network is called only as sensor network, unless otherwise specified particularly.

Fig. 3 illustrates a structure of the sensor network. In order to measure the residual quantity of products in use (318, 319 in Fig. 3), the sensor network comprises one or more sensors (sensor network nodes) 301 to 310 or RFID readers (314, 315 in Fig.3), one or more base stations (including relay stations) 311 and a system management server 312.

Fig. 4A illustrates a structure of the sensors (sensor network nodes) 301 to 310, while Fig. 4B illustrates a structure of the base station 311 (or relay station). The sensor (sensor network node) 301 is configured with

(1) a sensor unit (sensors having different functions in accordance with weight, beam, infrared beam or the like are used and a sensor unit has sometimes a plurality of functions) 401,
(2) a controller unit (microcomputer) 402,
(3) a power unit (any unit which can supply the power from an external unit, or can supply from a battery, or can supply through the power generating function, or any combination of these units) 403, and
(4) a transceiver unit 404.

The transceiver unit 404 is provided with an antenna 405 for communications among the sensors and between each sensor and each base station (or relay station). Meanwhile, the base station 311 (or relay station) is configured with,

(1) a controller unit (microcomputer) 406,
(2) a network interface unit 407,
(3) a power unit 408, and
(4) a transceiver unit 409.

The transceiver unit is provided with an antenna 410 for enabling communication among sensors forming the sensor network and between the sensors and the base stations (or relay stations), and moreover, the wireless communication with the server for system management 312.

The system management server 312 comprises

(1) functions (programs) for management of base station/sensor network node, and
(2) database and enables wireless communication with each base station 311. The type of the server is not limited and an exclusive server or a personal computer or the like may be used so long as it has the system management function and moreover can include therein the application software using sensor information. Moreover, a display 313 is also required to display the result of execution of the application program. The display is not limited in the type and may be an exclusive display for the system management server 311 or may be a television receiver or mobile terminal which can display images through communication with the server.

Each sensor and each base station (or relay station) must be allocated to satisfy the following conditions as illustrated in Fig. 3.

(1) One or more communication path (the path indicated with chain of arrow marks in both directions in Fig. 3) extended via the other sensors in the sensor network up to the system management server 312 from the desired sensor 302 (or 306) for residual quantity monitoring and the base stations (or relay stations) must be provided. A plurality of paths are preferably acquired, considering failure or stability.
(2) Like the item (1) , one or more communication paths (path indicated with chain of arrows in both directions in Fig. 3) extended via the sensors in the sensor network up to the system management server 312 from the RFID reader 314 or the sensor 315 for inventory management must be provided. A plurality of paths are also preferably acquired here.

Here, in the case of the residual quantity and inventory management system using the RFID, each sensor (301 to 310, 315) preferably provides the function of the RFID reader.

The conditions described above can also be described as follows. Namely, one or more nodes surely exist within the regions in which the wireless communication is possible (regions indicated with the circle of dotted lines such as 316, 317 which are not always illustrated as circles) , respectively for the desired sensors, base stations (or relay stations) and server for system management (hereinafter called respectively as node) provided within the sensor network and one connected graph can be formed by connecting the nodes within the regions (316, 317 or the like) in which the wireless communication is possible. Moreover, it is also preferable that a plurality of paths up to the other desired nodes from the node corresponding to the system management server 312.

A structure of the sensor network has been described above. Moreover, in the following embodiments, the system management server 312 is assumed as a personal computer, while the display 313 as a display of the personal computer. Moreover, it is also assumed that the inventory management and ordering program is assumed to be installed in the personal computer (312 and 313) . In addition, the personal computer is also assumed to be connected to the Internet. However, the present invention is never limited thereto and the structure described above is only one aspect. The present invention will be described in detail below with reference to the preferred embodiments.

First Embodiment

In this embodiment, an example, in which the present invention is adapted to monitoring of residual quantity, inventory management, ordering of expendables in a children's hospital 101 and to order acceptance and forwarding in the order acceptance side will be described with reference to Figs, 1, 2, 3, 5 and 6. Fig. 1 is a system diagram of the present invention and Fig. 2 is a process flow diagram in the present invention.

At the children's hospital, use of wireless communication will sometimes result in erroneous operation of medical instruments and use of the wireless sensor network is also assumed to be inadequate. In this case, the wireless part is replaced with a wired part and the other portions are operated as the wireless portions. In some cases, the entire portions are replaced with the wired part. In the following description, there is no limitation on the wired portions or wireless portions.

In the hospital, various expendables are used but only three kinds of expendables of syringe (a kind of syringe), bondage (a kind of bondage), and alcohol for sterilization (a kind of sterilization) are defined as the management objects. Products to be used are respectively determined and are assumed to be never altered. Respective expendables will be described.

(1) Syringe: One syringe has the weight of 20 g. Purchasing is executed in units of packages. One package contains 20 syringes and the RFID is attached in units of packages.
(2) Bondage: One bondage (having the length of 20 m) has the weight of 200 g. Purchase is executed in units of packages. One package contains 20 bondages and the RFID is also attached in units of packages.
(3) Alcohol for sterilization: This alcohol is contained in a bottle. One bottle contains 500 cc and has the total weight of 500 g. Amount of content is 400 g. Purchase is executed in unit of bottle. The RFID is attached in unit of bottle.

Each RFID is attached with an ID. In this embodiment, the product of the same kind can be recognized as the similar product. Moreover, the ID is individually attached and it is enough when the ID is attached to recognize two products when the two bottles of alcohol for sterilization exist as the similar product. Necessary contents of the ID of the RFID is different in accordance with the application. For example, name of manufacturer, date of manufacture, and price may be considered as the examples of such contents. In the present invention, however, such ID indicating the minimum contents described above may be used.

Next, environment of hospital 101 and structure of the sensor network 102 will be described.

A hospital is provided with two consulting rooms (consulting rooms 1 (103), 2 (104)) with each room provided respectively with one of the syringe boxes 105, 106, bondage boxes 107, 108 and boxes for alcohol for sterilization 109, 110). Moreover, a unit of notebook-sized personal computers 111, 112 is also provided in each consulting room and is connected with the LAN 114 to a personal computer 113 as the server for inventory management and ordering (corresponding to the system management server 312 in Fig. 3) of the hospital. The syringe boxes 105, 106 are respectively capable of containing 30 syringes in maximum and are provided with weight sensors 115, 116 at the bottom surfaces. The data that the syringe is the management object and the weight of one syringe is 20g are stored to the weight sensors 115, 116. The bondage boxes 107, 108 are respectively capable of containing 40 volumes of bondage in maximum and are respectively provided with weight sensors 117, 118. The data that the management object is bondage and the weight of a volume of bondage is 200g are stored to the weight sensors 117, 118. The boxes 109, 110 for alcohol for sterilization are respectively capable of containing three bottles in maximum and the weight sensors 119, 120 are also set to the bottom surfaces. The data that the management object is alcohol for sterilization and the maximum weight of a bottle of alcohol for sterilization is 500g are also stored to the weight sensors 119, 120.

A nurse station 121 is provided with a personal computer 113 as the server for inventory management and ordering of the hospital. At the deeper area of the nurse station 121, a storehouse for medical instruments 122 and a storehouse of medicines 123 are respectively prepared. The syringes 124 and bondages 125 are stored in the sealed conditions while these are still packaged in the storehouse for medical instruments 122. The bottles of alcohol for sterilization 126 are also stored in the sealed conditions in the storehouse for medicines 123. Each storehouse 122, 123 is also provided with the RFIDs 127 to 129 to measure the amount of inventory. These expendables are taken out from each storehouse as required, unsealed and then carried to the consulting rooms. The ordering destinations of respective expendable are previously determined. Namely, the syringes and bondages are ordered to a medical instrument wholesaler A (130), while the alcohol for sterilization is ordered to a medicine wholesaler B (131) and these wholesalers are stored to the server for inventory management and ordering 113. Here, it is assumed that this hospital is not provided with the hospitalization facilities.

Next, conditions for supplement to each consulting room in the residual quantity measurement process 201 are as follows. Here, the supplement conditions of both consulting rooms are assumed to be identical.

(1) Syringe: Five or more,
(2) Bondage: 400m or less (namely, 400 g or less, corresponding to two volumes),
(3) Alcohol for sterilization: 200 cc or less (namely, 300 g or less including bottles).

Moreover, the ordering conditions based on the result (residual quantity + amount of inventory) of the measurement result acquisition process 203 for acquiring the results of the residual quantity measurement process 201 and inventory measurement process 202 are as follows.

(1) Syringe: 300 or less (5600 g or less, corresponding to 14 packages),
(2) Bondage: 2000m or less (10 kg or less, corresponding to 100 volumes, namely five packages),
(3) Alcohol for sterilization: 5000 cc or less (4000 g or less, corresponding to five bottles).

Average amount of use per day in the hospital is as follows (amount of use in each consulting hospital corresponds to 1/2 of above amounts).

(1) Syringe: 80 bottles (namely, 1600 g, corresponding to four packages),
(2) Bondage: 600 m (namely 6 kg, 30 volumes, namely corresponding to 1.5 packages),
(3) Alcohol for sterilization: 1200 cc (namely, 960 g, corresponding to 2.4 bottles).

Above values are stored in the management server.

Moreover, the operation timings of the sensors 115 to 110 and RFID reader are set to the period up to 20:00 at night from 8:00 in the morning with the interval of five minutes (the consulting time of hospital is assigned during the period up to 19:30 at night from 8:00 in the morning and the consulting rooms are closed on Sunday) and when a residual quantity/inventory measurement instruction 204 is issued from the server for inventory management and ordering 113.

The environment and pre-conditions are described above. Next, the example of practical processes will be described below.

One day (Oct. 10, 2005), the residual quantity and inventory of each expendable at 7:00 in the morning are assumed as follow.

(1) Residual quantity of consulting room 1 (103):

10 syringes (200 g), 3 volumes of bondage (however, one is partially used) (50 m = 500 g), alcohol for sterilization 300 cc = 240 g (340 g including a bottle)

(2) Residual quantity of consulting room 2 (104):

6 syringes (120 g), 4 volumes of bondage (however, one is partly used) (70 m = 700 g), alcohol for sterilization 400 cc = 320 g (420 g including bottles)

(3) Inventory of each storehouse (122, 123):

15 packages of syringe = 300 syringes = 6000 g, 11 packages of bondage = 220 volumes = 4400 m = 44000 g, 12 bottles

of alcohol for sterilization = 6000 cc = 4800g (6000 g including bottles)

(4) Total: 316 syringes (6260 g), 227 volumes of bondage (however, two volumes are partly used) (4520 m = 45200 g), alcohol for sterilization of 6700 cc = 5360 g (6760 g (14 bottles) including bottles)

These residual quantity and inventory have exceeded the conditions of supplement and ordering.

At 7:30 in the morning, a head nurse inputs the residual quantity/inventory measurement instruction 204 from the personal computer in the nurse station 121 (server for inventory management and ordering) 113 in order to check the conditions of each expendable. The server for inventory management and ordering 113 issues the residual quantity/ inventory measurement instruction 204 to the sensors 115 to 120 and RFID readers 127 to 129 through the sensor network 102. As a result, the measurement result acquisition process 203 and exchange or ordering decision process 205 are executed, the result indicated in the conditions at 7:00 in the morning described above are returned, and the result is displayed as indicated by 501 in Fig. 5 on the display of personal computer 113. As a result, it can be understood that the necessity of supplement and ordering is not required now. The result of forecasting of the period of supplement and ordering forecasted in the exchange/order decision process 205 may be displayed as indicated by 601 in Fig. 6. Contents of the result are as follows.

(1) Forecasted period of supplement to the consulting room 1:

Since use of 40 syringes is forecasted, supplement is necessary during the today's consulting period;
Since use of 15 volumes of bondage = 300 m = 6000 g is forecasted, supplement is also necessary during the today's consulting period;
Since use of alcohol for sterilization of 6000 cc = 480 g is forecasted, supplement is necessary during the today's consulting period;

(2) Forecasted time for supplement to the consulting room 2:

Supplement of all expendables is necessary during the today' s consulting period as in the case of the consulting room 1;

(3) Forecasted time for ordering:

Ordering can be estimated as follows.
Since use of 80 syringes is forecasted, supplement is necessary during the today's consulting period;

Since use of bondage of 30 volumes = 600 m = 12000 g is forecasted, supplement during the today's consulting period is unnecessary, however, the ordering is necessary in the next day;

Since use of alcohol for sterilization of 1200 cc = 960 g is forecasted, supplement during the today's consulting period is unnecessary. However, supplement will be necessary in the day after tomorrow.

The forecasted result of the period in which the inventory becomes zero (0) is also illustrated as 601 in Fig. 6. Contents of result are as follows. Namely, such period appears after five days for the syringes, after eight days for bondage and after six days for alcohol for sterilization. Accordingly, the delivery data of the syringes which are assumed to require the supplement today can be set within four days. Since the supplier A as the present contracted supplier often sets the next day as the delivery date, the head nurse introduces the automatic ordering and executes the supplement to each consulting room when it is required.

At 8:00 in the morning, the server for inventory management and ordering 113 issues the residual quantity/ inventory measurement instruction 204 at the constant time. However, the result becomes identical to that at the 7: 30 in the morning and particular notification is not executed. At 8:30 in the morning, consultation starts in each consulting room 103, 104 and expendables are used.

At 9:03 in the morning, only four syringes (80 g) are left in the consulting room 2 (104), resulting in the condition in which the supplement is required (the system does not detect this condition). Here, it is assumed that at 9:05 in the morning, the server for inventory management and ordering 113 issues the residual quantity/inventory measurement instruction 204, bringing about the following results.

(1) Residual quantity in the consulting room 1 (103):

Six syringes (120 g), three volumes of bondage (however, one is partly used) (45 m = 450 g), alcohol for sterilization of 250 cc = 200 g (300 g including bottles).

(2) Residual quantity in the consulting room 1 (104):

Four syringes (80 g), three volumes of bondage (however, one is partly used) (70 m = 700 g) , alcohol for sterilization of 300 cc = 240 g (340 g including bottles)

(3) Amount of inventory of storehouse:

15 packages of syringe = 300 syringes = 6000 g, 11 packages of bondage = 220 volumes = 4400 m = 44000 g, alcohol for sterilization of 12 bottles = 6000 cc = 4800 g

(4) Total:

310 syringes (6200 g), 226 volumes of bondage (however two volumes are partly used) (4515 m = 45150 g), alcohol for sterilization of 6550cc = 5240 g.

Therefore, the server for inventory management and ordering 113 transmits, as a result of exchange/ordering decision process 205, a syringe supplement instruction 206 to the consulting room 2 (104), namely to the notebook-sized personal computer 112 in the consulting room 2 for the display. When a nurse displays the conditions of the other residual quantity and inventory by watching the display described above, the result (2) at 9:05 in the morning is displayed for the consulting room 2. When the other forecasted supplement time in the consulting room 2 is displayed, it can be understood that the bondage of 10m is left until the supplement and the alcohol of sterilization of 100 cc is left until the supplement and therefore supplement of these expendables within the today's consulting period is essential. Here, the nurse has decided necessity of supplement of the expendables other than the syringes. Accordingly, the nurse respectively takes out one package of syringe and bondage and one bottle of alcohol for sterilization from the storehouses 122, 123 of the nurse station and then executes supplement (207) of these expendables to the consulting room 2. The packages of syringe and bondage are opened and these expendables are supplied to the boxes 106, 108, while the alcohol is supplied in direct to the box 110. Since the antennas of the RFIDs of the packages of syringe and bondage are broken at the time of opening, communication is disabled. Accordingly, counting of unsealed inventory is not carried out. Since the alcohol is kept unsealed, if the RFID reader is provided near to such product, this alcohol is counted as the unsealed inventory. Therefore, any method is selected from the following methods to prevent erroneous count.

(1) The cover of alcohol is once opened to break the RFID (the RFID must be attached to the cover as the precondition.

(2) The ID of RFID is updated with the RFID reader so that the product is not recognized as the inventory.

When it is assumed that expendables are not used at all in the consulting rooms 103, 104 during the period up to 9:15 from 9:05 in the stage that supplement 207 by the nurse is completed at 9: 15, result of measurement at the specified time of 9:15 becomes as follows.

(1) Residual quantity in the consulting room 1:

Six syringes (120 g), three volumes of bondage (however, one is partly used) (45 m = 450 g), alcohol for sterilization of 250cc = 200 g (300 g including the bottles)

(2) Residual quantity in the consulting room 2:

24 syringes (490 g), 23 volumes of bondage (however, one is partly used), (470 m = 4700 g), alcohol for sterilization of 800 cc = 640 g (740 g including bottles)

(3) Inventory of storehouse:

14 packages of syringe = 280 syringes = 5600 g, 10 packages of bondage = 200 volumes = 4000 m = 40000 g, alcohol for sterilization of 11 bottles = 5500cc = 4400 g

(4) Total:

310 syringes (6200 g), 226 volumes of bondage (however two volumes are partly used), (4515 g = 45150 g), alcohol for sterilization of 6550 cc = 5240 g.

Thereafter, supplement is performed and the result is assumed as follow as a result of measurement at the specified time of 11:20 in the morning.

(1) Residual quantity in the consulting room 1:

18 syringes (380 g), 13 volumes of bondage (however, one volume is partly used) (245m =245 g), alcohol for sterilization of 300 cc = 240 g (340 g including bottles)

(2) Residual quantity in the consulting room 2:

21 syringes (420 g), 15 volumes of bondage (however one volume is partly used) (290 m = 2900 g), alcohol for sterilization of 600 cc = 480g (530 g including bottles)

(3) Inventory of storehouse:

13 packages of syringe = 260 syringes, nine volumes of bondage = 180 volumes, alcohol for sterilization of 10 bottles = 5000cc

(4) Total:

299 syringes, 208 volumes of bondage (however two volumes are partly used) (2335 m = 45150 g), alcohol for sterilization of 5900 cc = 4480 g

According to the exchange/order decision process 205, the syringes satisfy the ordering conditions of 300 syringes or less. Moreover, the alcohol for sterilization requires the supplement within one day according to the forecasting of the ordering time in the exchange/order decision process 205. This result is notified and displayed on the server 113 for inventory management and ordering. The nurse staying at the nurse station having watched the display of result makes contact with the head nurse. The head nurse decides ordering of the alcohol for sterilization in addition to the syringes. In this hospital, the head nurse issues an ordering request and the chief of the accounting section approves such ordering. Therefore, in view of executing single issuance of request rather than a plurality of times of issuance, two kinds of orderings have been decided. Here, the ordering process 207 is executed. The head nurse inputs, from the server for inventory management and ordering 113, the orders of 15 packages of syringe (300 syringes) and 10 bottles (5000cc) of alcohol for sterilization to the suppliers A 130 and B 131 and sends the request to the chief of the accounting section (to the personal computer 133 of the chief of the accounting section connected by LAN 132 to the server for inventory management and ordering 113. The Chief of the accounting section acknowledges (clicks the acknowledgment button) the contents of input. The ordering process 207 to the suppliers is completed via the server for inventory management and ordering through the Internet.

When orders are transmitted, verification of order (contents of order, assumed delivery dates, and prices) are returned by mail from respective suppliers.

In the side of suppliers 130, 131 as the order acceptance side, following processes are executed. An example of order acceptance of syringe by the supplier A (130) will be described.

The supplier A (130) has agreed the contracts of transaction of syringe with 50 hospitals 135 and the suppliers makes as a rule the forwarding in the next day when the supplier A has received the orders from the hospitals until the time of 20:00 at night. Moreover, the supplier A also has agreed the contracts to receive delivery with two syringe makers (maker D (136), maker E (137)).

From the transaction conditions in the past, following data are stored in the server for management of acceptance of orders.

(1) Total order acceptance condition:

Orders of 5000 syringes in average are received a day. Delivery of 3000 syringes in average is received a day from the maker D 136, while delivery of 2000 syringes in average is received a day from the maker E 137. Delivery is assumed to be made twice a week. The number of ordered syringes is counted up to 5500 from 4500 during a year which corresponds to 99% in the order of syringes.

(2) Order acceptance condition from the children's hospital 101:

Order of 300 syringes is accepted once in the 4.4 days in average.

From above description, the supplier A (130) is almost capable of realizing the delivery of the next day by acquiring the inventory of 5500 syringes in average everyday. Therefore, the server for management of acceptance of order 113 executes the management to eliminate extreme increase of inventory by receiving delivery of the order acceptance in a certain day as the number of orders of the next day (four days in a week from two makers because the delivery is however executed twice).

It is assumed as the morning on Oct. 10, 2005. The order acceptance has been made on Oct. 6, 2005 from the children's hospital. Accordingly, the next order acceptance day is assumed as Oct. 10 or 11 from the order acceptance forecasting process 208. Therefore, when the order is assumed to be accepted on Oct. 10, the forecasted order acceptance is counted up to 5300 syringes when the order acceptance from the other hospitals on Oct. 10 is summed. When the inventory in the morning on Oct. 10 is assumed as 6200 syringes, amount of delivery of that day as 5200 syringes and amount of acceptance of that day as 6000 syringes, the inventory in the morning on Oct. 11 is counted up to 6200 syringes. Therefore, this value satisfies the forecasted order acceptance on Oct. 10. If it is decided to generate shortage of inventory, the sufficient inventory must be acquired by requesting additional manufacture to the makers in the early stage or issuing the order to the other makers (inventory preparing process 209). In actual, the supplier accepts the order of 300 syringes is (product order acceptance process 210) via the Internet from the children's hospital 101 on Oct. 10, requests the forwarding on Oct. 11 to the contracted forwarding agent 139, and receives the payment in the other day with the transfer through the account in the bank by sending the bill (product forwarding process 212). This supplier A 130 makes public the daily inventory, order acceptance condition through the Internet to the contracted customers, namely to the makers and hospitals (product information offering process 211) and therefore the contracted customers can use such information for the production plan or the ordering plan.

Here, each processing part of the inventory management and ordering system, and the order acceptance management and forwarding management system of the present invention will be complementarily described regarding this embodiment.

First, the inventory management and ordering system will be described first. The part of residual quantity measurement 140 executes the residual quantity measurement process 210 using the sensor network 102 including the sensors 115 to 120 and a base station 141. The part of inventory measurement 142 executes the inventory measurement process 202 using the sensor network 102 including the RFID readers 127 to 129 and a base station 141. The part of acquisition of measurement result executes the measurement result acquisition process of the program installed in the server for inventory management and ordering 113 on the basis of the results of the residual quantity measurement process 201 and inventory measurement process 202. The part of decision of exchange or order 144 executes the exchange or order decision process 205 of the program installed in the server for inventory management and ordering 113. The part of ordering process 145 executes the ordering process 207 to the server for order acceptance management of the suppliers 130, 131 in the order acceptance side via the Internet 134 from the server for inventory management and ordering 113.

Next, the order acceptance management and forwarding management system will be described.

The part of forecasting of order acceptance 146 executes the order acceptance forecasting process 208 of the program installed in the server for order acceptance management 138 on the basis of the result of order acceptance in the past. The part of preparing inventory 147 instructs arrangement of the inventory preparation process 209 of the program installed in the server for order acceptance management 138 from the result of forecasting of the order acceptance and the present inventory. The part of offering product information 149 offers the price and new product information or the like to the ordering side in the product information offering process 211 of the program installed in the server for order acceptance management through the Internet 134. The part of accepting order 150 executes the ordering process 207 with the server for order acceptance management from the side of the orderer through the Internet. The part of forwarding 151 executes the forwarding by entrusting the products ordered to the forwarding agent 139 and also executes the process for sending the bill and receiving the payment.

According to this embodiment, the system for thoroughly executing the processes from the residual quantity and inventory management to the support of ordering management and purchase and moreover the order acceptance management in the side of order acceptance for a plurality of expendables used in the hospital by making use of the sensor network. Even when the place to use expendables is different from the place to store the expendables in the hospital, the thorough ordering process can be executed by management of both residual quantity and inventory on the basis of such management. This process is particularly effective when a plurality of consulting rooms are provided as the places to use expendables. Accordingly, the adequate amount of inventory can be acquired easily and generation of excessive inventory or shortage of inventory can be prevented, it can always make contribution to effective management of hospital. Moreover, use of the wireless sensor network will further make easier the setting of the sensor or the like to the vessels to store the expendables in the place to use the expendables. Therefore, the inventory management of many expendables to be used in the hospital can also be realized more easily in the entire processes from the installation of sensors to the inventory management and ordering as the useful effect of the present invention.

Second Embodiment

Described next is an example where the present invention is adapted for the inventory management in a factory.

Screws A and screws B are used in the manufacturing line of a certain product. For a product, namely five screws A are used at an area in the line, while 10 screws in total, namely five screws B are also used at the two areas in the line. At the place (three places) to use the screws, the boxes for storing the screws are provided. Within the boxes, the weight sensors are provided and the number of screws can be detected from the weight thereof. Weight of a piece of screw is assumed as 10g for the screws A and B. The screws of 200g in maximum can be stored within the screw box.

It is assumed that the maximum product manufacturing capability per hour at the factory is 40 pieces and the maximum manufacturing capability per day is 400 pieces. Namely, it is enough when 2000 screws A in maximum are acquired, while 4000 screws B in maximum are acquired (while it is enough when 200 screws A in maximum is acquired per hour, while 400 screws B in maximum is acquired per hour).

The factory is provided with two storehouses C and D, which are capable of acquiring inventory only of 500 screws A and 1000 screws B in maximum (screws A are 1000 in total, screws B are 2000 in total, namely these screws correspond to the total amount of screws per half-day. Therefore, amount of shortage must be purchased from screw makers. A screw maker is capable of forwarding the screws corresponding to the order acceptance to the factory within an hour when the inventory exists. If inventory is shortage, screws of the order accepted will be delivered even in the earliest in the morning of the next day. Each weight sensor is connected to the server for inventory management and ordering and a person in charge of ordering is always staying at the area near the terminal of the server for management. The person in charge of ordering is authorized to make ordering to makers. The server for order acceptance management is connected with the LAN to the personal computers in the storehouses C and D and a person in charge of storehouse management immediately makes arrangement to deliver the inventory to the line when supply of screws is requested. In each storehouse, screws are contained in a large size box and are placed under the management of the weight sensors. These sensors are also connected to the server for inventory management and ordering. The server for inventory management and ordering is also connected to the makers through the Internet.

The number of products to be manufactured in the factory is determined in the morning of that day and this number of products to be manufactured varies every day. During an year in the past, 50 pieces in minimum have been manufactured, 400 pieces in maximum have also been manufactured, and 250 pieces in average have also been manufactured. Variation in the number of products manufactured is large and it is assumed to be difficult to forecast the number of products to be manufactured during a day.

Supplement of screws is preferentially executed from the storehouse A and the delivered screws are also carried into the storehouse A with preference.

Conditions of supplement of screw is set to 100 pieces or less for each box, and conditions of ordering of screw determined by the server for management have the highest priority. When the number of screws is less than the number of screws forecasted under these conditions, the number of screws A in the sum of the residual quantity and inventory is set to 300 pieces or less, while the number of crews B is set to 600 pieces or less.

The timing of sensing is set up to 21:00 at night from 7:00 in the morning with an interval of 5 minutes.

Moreover, the operating time of the factory is determined for the week days up to 17:00 in the evening from 8:00 in the morning but this operating time can also be extended up to 20: 00 at night, as required. The lunch break is set to an hour up to 13:00 in the afternoon from 12:00 at noon.

At 7:00 in the morning on Sept. 1, the number of screws A in the sum of the residual quantity and inventory is assumed as 400 pieces, while the number of screws B as 700 pieces. These inventories are all assumed to be stored in the storehouse. The number of screws to be manufactured on that day has been determined as 300 pieces (the minimum operating time is 7.5 hours). Manufacture of screws is completed at 16:30 in the afternoon through the full-operation in which the lunch break is considered. The required number of screws A is 1500 pieces, while the required number of screws B is 3000 pieces. The shortage of screws A is determined as 1100 pieces, while the shortage of screws B as 2300 pieces.

When the maximum number of screws A and screws B are put into the boxes provided in the manufacturing line, the total number of screws A as the inventory of storehouse is 200 pieces, while the screws B is 300 pieces. Tolerance of storehouse C for addition of screws A is 500 pieces, while screws B is 1000 pieces. Tolerance of storehouse D for addition of screws A is 300 pieces, while screws B is 700 pieces. Accordingly, total tolerance of storehouses C and D for addition of screws A and screws B is respectively 800 pieces and 1700 pieces. Therefore, if the shortage of screws A and B as 1100 pieces and 2300 pieces are ordered today to the screw maker, such amount of screws A and B are delivered at 8:00 in the morning when such amount of screws is stored as the inventory. As a result, the total number of screws cannot be stored completely in the storehouses. If these screws are not ordered, the assumed time in which all screws B are completed used can be considered at 9:30 in the morning. Therefore, when a certain tolerance is considered for delivery of screws at 8:00 in the morning, the total number of screws A and B just before the delivery at 9:00 is assumed as 200 pieces of screws A and 300 pieces of screws B. Since these screws A and B may be provided in the manufacturing line, it is possible to keep the storehouse in the vacant condition. Therefore, it is assumed here to transmit the orders of screws A of 1000 pieces and screws B of 2000 pieces at 8:00 in the morning. In this stage, shortage of screws A is 100 pieces, while shortage of screws B is 300 pieces. Although the number of screws to be manufactured in the next day is not yet determined, the screws A of 1250 pieces and screws B of 2500 pieces will be required when the average number of screws to be manufactured is assumed as 250 pieces. The total number of screws A and B reach 1350 pieces and 2800 pieces. When the number of screws to be stored in the line is subtracted, the screws A of 1150 pieces and screws B of 2400 pieces must be stored in the storehouses, resulting in the remainders of 150 screws A and 400 screws B. Here, it is also assumed that the remainders are prepared for the order in the next day and remaining number of screws A of 2000 and crews B of 2400 are ordered today. Here, it is calculated when such shortage in the ordering at 9:00 will actually be required, it can be understood by inversely calculating such time from the end of manufacture at 16:30 in the afternoon that the screws B will be used completely at 15:45 in the afternoon. Therefore, when the ordering of the assumed number of screws is executed at 14:00 in the afternoon so that the screws are delivered at 15: 00 (existing actual operating hours are six hours) considering a certain amount of tolerance, the total number of screws as the sum of the residual quantity and the amount of inventory in the stage where screws are delivered at 15:00 reaches 1200 pieces in the screws A and 2700 pieces in the screws B. The screws A can be stored in the line and the storehouse, while the screws B generates the remainders of 300 pieces. Therefore, when ordering of screws A of 800 pieces and screws B of 1000 pieces is executed considering delay of manufacture (an hour), the screws A reaches 1000 pieces and the screws B reaches 1300 pieces, resulting in a certain tolerance in the stage of delivery at 15:00 in the afternoon. Even in the stage where the manufacture has been completed, since the total numbers of screws A and screws B may be calculated as the sum of the residual quantity of 700 pieces and amount of inventory, the assumed remainders of screws A of 550 pieces and the screws B of 1800 pieces of the next day are determined to be transferred to the ordering of the next day.

Above processes may be summarized as follows.

(1) Ordering of screws A of 1000 pieces and screws B of 2000 pieces is executed at 8:00 in the morning.

(2) Ordering of screws A of 800 pieces and screws B of 1000 pieces is executed at 14:00 in the afternoon.

(3) Total: Ordering of screws A or 1800 pieces and screws B of 3000 pieces has been executed.

(4) Assumed ordering in the next day (minimum number):

Screw A is 550 pieces. Screw B is 1800 pieces.

Amount of manufacture of the day after tomorrow is not included. When this schedule is transmitted to the screw makers through the Internet, a response of order acceptance is received as the mail and the ordering of the items (1) and (2) has been executed, unless otherwise the manufacture is delayed.

On the other hand, a screw maker in the order acceptance side has already acquired the inventory for that day but is required to set the manufacturing plan for the factory, considering the item (4) or (3) and the achievement of the order acceptance in the past for the next day and successive days. Here, order acceptance from the other factory is of course considered.

Here, it is also assumed that manufacturing goes well in the manufacturing line from.8:00 in the morning and the manufacturing pace of 40 pieces/hour is maintained. Since the number of screws of three boxes reaches 100 at 8:30, an instruction for supplement is issued from the sensor to the server for management. Moreover, since the inventories of the screws A and B in the storehouse C become zero, while the inventories of screws A and B in the storehouse D become 200 pieces and 100 pieces. Therefore, supplement of screw A of 100 pieces and screw B of 200 pieces is executed from the storehouse D. In this timing, inventories of the screw A becomes 100 pieces and the screw B becomes 100 pieces in the storehouse D. At 9: 00 in the morning, an instruction of supplement is also generated. Supplement of screw A may be executed from the storehouse D but supplement of only 100 pieces among 200 pieces may be executed from the storehouse B. Therefore, supplement of 100 pieces is executed first from the storehouse B and an access is made to the maker which is planning to make delivery at 9:00 in the morning. Since an access is made to send a message indicating the delivery with a delay time of about five minutes, the screws have been delivered at 9:05 after the waiting time of five minutes. An instruction for supplement is generated at 9:05 but this instruction is neglected here and the total number of 1000 pieces of screws A and the total number of 2000 pieces of screws B are completely stored in the storehouse C. Next, supplement of screws B of 100 pieces is executed to the manufacturing line from the storehouse C. Thereafter, at 9:00 in the morning, a request for supplement which is similar to that issued at 8:30 is also issued from the manufacturing line to the storehouse.

Supplement and ordering are executed as described above.

According to the present invention, a system for thoroughly executing the processes from the inventory management and ordering to support of purchase, and moreover to order acceptance management in the side of order acceptance can be realized. Even when the place to use components and execute assembling is different from the place to store the components, it is possible to execute both residual quantity management and inventory management and to execute the ordering process on the basis of both managements. Accordingly, since adequate amount of inventory can always be acquired easily and generation of excessive inventory and insufficient inventory can be prevented, the present invention can provide the effect which can make sufficient contribution to effective management of factory. In addition, with use of the wireless sensor network, sensors or the like may be installed easily to the vessel for storing the components at the place to use the components. Therefore, the present invention can also provide the effect that the inventory management of many components used in the factory can be realized easily in the total field covering from installation of the sensors to inventory management and ordering.

Third Embodiment

In this embodiment, an example to which the present invention has been adapted will be described. Namely the present invention is adapted to the residual quantity management, inventory management and ordering management of expendables in the household and to the order acceptance and forwarding management in the side of order acceptance. Here, the wheat flour and toilet paper are defined as the expendables in this embodiment.

A structure of the sensor network will be described first. A flour container provided in the kitchen is provided with a weight sensor to measure weight of wheat flour stored in the flour container. A holder of toilet paper prepared in a toilet is provided with an ultra-red sensor to measure the residual quantity of the toilet paper (thickness of the paper portion) . A personal computer which is working as a server for inventory management and ordering is installed in a household and this computer is provided with a display. Moreover, a base station is provided between the sensor and personal computer and it is assumed here that the sensors and base station are allocated within the distance ensuring wireless communication between them. Moreover, the RFID readers are respectively provided at the area near the rack for storing the toilet paper which have been purchased usually and the area near the place to store the unopened wheat flour and these RFID readers are also capable of making communication with the base station. The base station and server (personal computer) are also assumed to make wireless communication and moreover the personal computer is assumed to be always connected to the Internet. The server for management is assumed to store the program for inventory management and ordering management.

The timing for issuing an instruction for detecting residual quantity and inventory management by the program for inventory management and ordering management will be described next. Here, the timing for issuance of instruction is determined in the following three timings of constant time in every day (from 6:00 in the morning to 23:00 at night with an interval of an hour), when the server has received the signal from the desired sensor, and when a user has inputted a request for detection of residual quantity and inventory from the server. Here, the timing in which the server has received the signal from the desired senor means that when the weight sensor of the flour container has operated depending on the opening and closing of the flour container and when the holder of toilet paper has moved, and each sensor is assumed to operate by sensing such events.

As the ordering destination of wheat flour when the inventory thereof becomes short is previously determined to the flour shop A, while that of the toilet paper as the shop B. Timing for issuing the ordering is determined respectively for the wheat flour and toilet paper when the residual quantity of flour becomes 2kg or less and when the inventory of toilet paper becomes zero (remaining quantity is neglected). Amount of order of flour is set as a bag (content is 10 kg) of wheat flour (usual price is ¥5000) and that of toilet paper is set to two packs (each pack includes 12 volumes) of the brand D of the maker C (usual price is ¥300/pack). These are assumed to be registered in the program for inventory management and ordering. Moreover, the program for forecasting the ordering period is assumed to fix the consumption of flour to 1kg/day and consumption of toilet paper to a volume/day.

Here, the present situation at the household will be described.

The flour container contains 3kg of flour and the inventory is zero (zero bag). This content is larger by 1 kg than the value of ordering condition. A volume of toilet paper is set in the toilet but when two meters are used, the content of toilet paper becomes zero. As the inventory, only one pack containing 12 volumes is left unsealed. The present time is assumed as the time just before 6:00 in the morning.

At the time of just 6:00, the server for management issues an inventory detecting instruction to each RFID reader. The sensor in the flour container returns the weight data of 3kg to the server. The sensor of the holder of toilet paper returns the residual quantity data of 5%. The RFID reader of wheat flour returns the inventory data of 0. An inventory reader of the toilet paper returns the inventory data of one pack. The program for management of the server decides that the ordering conditions are not satisfied from the conditions described above and displays the message indicating needlessness of ordering.

Next, the period in which inventory becomes zero is forecasted. Since the total amount of flour is 3 kg (sum of the residual quantity and amount of inventory) , this flour will be consumed within the three days. The result of forecasting that the flour will become zero after three days is displayed. Since the residual quantity of the toilet paper is almost zero and inventory thereof is one pack (= 12 volumes), the result of forecasting that the toilet paper will become zero after 12 days is displayed.

Next, the ordering period is forecasted. Since the flour of 3 kg (sum of the residual quantity and inventory) is left, it will be reduced to 2 kg in the next day. Therefore, the result of forecasting is displayed as ordering is necessary in the next day. Since the residual quantity of the toilet paper is almost zero and the inventory is only one pack (= 12 volumes), the result of forecasting that ordering must be made today is displayed. In this timing, a consumer is capable of executing the ordering of toilet paper but the consumer is assumed here not to execute the ordering.

It is assumed that a consumer takes out the flour of 1 kg from the flour container for preparing the foods of a day at 6:30 in the morning. When the flour container is opened, the condition is just identical to that at 6:00 in the morning. However, when the flour is taken out and the flour container is closed, the residual quantity of flour is reduced to 2 kg. This information is transmitted to the server for inventory management and ordering. The server for inventory management and ordering issues a residual quantity and inventory detecting instruction as in the case of the time at 6:00 in the morning to obtain the information. Any alteration is not detected for the toilet paper but the sum of the residual quantity and inventory of flour becomes equal to 2 kg, satisfying the conditions of ordering. Therefore, the server execute the ordering of flour of one bag containing 10 kg (usual price is ¥5000) to the flour shop A. After a certain period, a mail is received from the flour shop A notifying that the order has been accepted through the Internet and the delivery of flour is scheduled to be executed during the period up to time 15:00 from the time 13:00 in the afternoon. Since there is no particular problem, no response has been mailed. Actually, however, a user has received the advertisement mail, from the flour shop A, through the Internet in the evening of the day two days before indicating the contents that the assumed date of ordering will come after four days, price of flour of 10 kg is ¥4500 because it is sold well recently, the purchase of healthy food is recommended. This time, however, the consumer is not particularly intend to send any change of addition, the consumer does not issue any instruction to the server.

The flour shop A which has accepted the order makes delivery of the ordered flour to the consumer within the ordering day (here, specified as 13:55 in the afternoon and received the payment of ¥5000.

In the consumer house, the server issues, at 2:00 in the afternoon, a residual quantity/inventory detection instruction of the specified period. Here, only the example of wheat flour is described. However, the residual quantity and inventory detection instruction is also issued for the toilet paper. When the flour delivered is assumed to be stored in the storing place, the RFID reader of the wheat flour reads the contents of reader and then transmits the data to the server. Contents of the RFID include name of food: refined flour, kind of flour: wheat flour, producing area: Tokyo, year of production: 2002, producer name: E, weight: 10 kg, wholesaler: F, date and time of packing: 10:08, on May, 20, 2003, and others. The server recognizes the inventory of flour of 10 kg and displays this inventory. A consumer opens the bag of flour at 14:20 in the afternoon. In this timing, the antenna of the RFID is broken and cannot be recognized as the inventory. Since the flour of 10 kg is stored in the flour container, the flour in the total amount of 12 kg is now stored in the flour container. When the flour container is closed, the server recognizes the residual quantity of 12 kg and inventory is zero ( 0 ) bag.

The toilet paper will be described. First, it is assumed that the toile paper is consumed in 1 m (consumed entirely) in the toilet paper at 7:30 in the morning. The sensor of toilet paper generates the data indicating that the residual quantity is 0%, suggesting that the inventory is only one pack (= 12 volumes). A user opens the inventory and then sets only one volume among the 12 volumes to the holder. In this case, the RFID is broken like the wheat flour and when one volume is set to the holder, the inventory is recognized as zero pack. Therefore, the ordering is executed to the shop B. The shop B, having accepted the ordering, delivers the two packs of toilet paper at 15:20 in the afternoon. The ship B receives in direct the payment of the fee of ¥600. When the check is executed at the specified time of 16:00 in the afternoon, the residual quantity of 60% and inventory of two packs are recognized. In this case, 11 volumes of toilet papers which are opened but not yet used are recognized. When the management program is controlled to recognize the replacement when the residual quantity reaches 0%, management in unit of quantity can also be realized, namely, recognition for sum of the inventory of two packs and 11 volumes (= 35 volumes) can be realized and thereby management accuracy can also be raised.

When improvement in management accuracy is requested, it can be realized by attaching one RFID to the toilet papers in unit of volume and then breaking this RFID when a volume of toilet paper is set to the holder, or using the RFID which allows data entry and by recognizing the use of toilet paper with a sensor through the entry of data.

The examples of the management and ordering of wheat flour and toilet paper at the household have been described above. The other expendables can also be placed under the management using the sensors provided in the place to use and the place to store.

Next, the order acceptance management and ordering in the side of accepting the order of wheat flour will be described below. The ordering situations in the past from the consumer is stored in the management server in the shop A. According to the contents being stored, the flour of 12 kg is ordered once in every 12 days in average during two years in the past without any fluctuation depending on the seasons. Moreover, the flour of 10 kg is also ordered from the other consumers totalized as 30 bags in average a day, also without any fluctuation depending on the seasons. At a certain time in the morning of a certain day, the present inventory is assumed as 90 bags in terms of the 10 kg of flour ordered from the consumer at the time before the 8 days. The shop A has agreed with the Japan Agricultural Cooperative G for the contract of wheat flour and is determined to make the ordering of flour (210 bags for a week) to the Agricultural Cooperative G when the inventory is reduced to 60 bags (for two days) . Therefore, the management server in the shop A has executed the ordering of 210 bags of flour of 10 kg to the Japan Agricultural Cooperative G and the flour corresponding to the ordering has been delivered in the evening of that day. Here , it can be assumed that a consumer will make the ordering after the four days, since the 33 bags have been sold and 210 bags have been delivered, the inventory of 177 bags for about six days can be detected. Accordingly, this inventory can be thought as enough until the assumed ordering day in which the consumer will make the ordering.

The shop A sends the mail to the consumer through the Internet at night on that day because the assumed ordering day of the consumer is coming near after the four days. Contents of the main include the advertisement in which the assumed ordering day is coming after the four days, the wheat flour is sold well and its price is ¥4500 per 10 kg, the healthy food is recommended for health. After the three days, the shop A has accepted, through the Internet, the order of wheat flour of one bag of 10 kg (usual price is ¥5000) from the consumer at the time having passed 6:30 in the morning . In this timing, since the inventory of the shop A is 61 bags in total, it is immediately notified to the orderer that forwarding will be made within that day. Since the shop A has determined that the product of which the order has been accepted in the morning is delivered at the time between 13:00 and 15:00 in the afternoon, it is also notified that the forwarding time is executed at the time between 13:00 and 15:00 in the afternoon. A person in charge of forwarding can execute the delivery at 13:55 in the afternoon. The person in charge of forwarding has received in direct the payment of ¥5000. The forwarding person does not receive the forwarding fee because such forwarding fee is never charged to the acceptance of order through the Internet.

A person in charge of forwarding inputs the results of delivery (destinations, destinations not yet delivered (absent destination), products, amount of charge received) to the server and thereby the delivery job has been completed. For the destinations not yet delivered (absent destination), a no-attendant contact tag is left in the mail box, for example, and when any contact cannot be attained until the evening, a mail is transmitted thereto for confirming the re-delivery.

The order acceptance and forwarding are performed in the same manner as the order acceptance of the toilet paper, but such procedures will be eliminated in this embodiment.

In this embodiment, the supplier has executed the forwarding (delivery) by its own responsibility but it is also possible that the forwarding is entrusted to the forwarding agency. The present invention is not limited to the method of forwarding.

For the payment and reception thereof, the desired method can be selected from various methods which are usually executed in the mail-order selling system, for example, a delivery person transfers a reception slip to the consumer when the product is delivered and received for the payment in the subsequent day at the financial organization through the deposition or the automatic withdrawal system is utilized by showing a credit card. The present invention is not limited to the method of payment and reception thereof.

According to this embodiment, since the inventory management and ordering are generated also in the side of order acceptance as in the case of the consumer, the supplier can form the inventory management and ordering system using the wireless sensor network as in the case of the consumer and this system can also be connected to the external communication network such as Internet. Therefore, the this embodiment of the present invention can provide the effect that job efficiency of supplier can be much improved. Moreover, a thorough system for executing the processes from residual quantity/inventory management to ordering management and purchase support, and moreover the order acceptance management in the side of order acceptance for a plurality of expendables used in the daily life can be realized by utilizing the sensor network. Even when the place to use the expendables in the daily life is different from the place to store such expendables, the management for both residual quantity and inventory can be realized and the ordering process can be executed thoroughly on the basis of such management for both residual quantity and inventory. When the present invention is adapted to the toilet paper, the present invention is particularly effective when a plurality of toilets are provided to use such toilet papers. Accordingly, the present invention can provide the effect that contribution can be made to improvement in quality of daily life because the adequate amount of inventory can always be acquired and generation of excessive inventory and insufficient inventory can be prevented. Moreover, use of the wireless sensor network will further make easier the installation of sensors to the vessels for holding the expendables at the place to use them. Accordingly, the present invention can provide the effect that the inventory management for many expendables used in the daily life can be realized easily in the entire field of processes from installation of sensors to management and ordering.

Fourth Embodiment

In the third embodiment described above, the supplier to which the ordering of wheat flour is executed is fixed but this fourth embodiment describes an example in which the supplier is not fixed. The processes up to the issuance of ordering of flour are similar to that of the third embodiment. Here, the flour shops A, B and a supermarket C are assumed to be registered as the suppliers to the server for inventory management and ordering. When the ordering instruction is issued, the server for inventory management and ordering acquires the product information of three suppliers through the Internet.

(1) Flour shop A: Price ¥5000, Inventory is provided,
Forwarding time: About 18:00, today,

(2) Flour shop B: Price ¥5100, Inventory is provided,
Forwarding time: About 16:00, today,

(3) Supermarket C: Price ¥4900, Inventory is provided,
Forwarding time: Tomorrow.

First, in the case where the selection condition to be stored in the server for inventory management and ordering is determined as the selection condition A in which the priority sequence is determined in accordance with the inventory, price and forwarding time, the supermarket (3) is selected in accordance with the price for executing the ordering.
When the selection condition is determined as the selection condition B in which the priority sequence is determined in accordance with the inventory, forwarding time and price, the shop B (2) is selected.
Moreover, when it is determined that a consumer issues the order considering the product information, the supplier can be determined with reference to the other information pieces through the Internet. For example, when the flour shop A can provide the point service of 3% and also provides the service allowing the purchase through the conversion of the number of points into the cash, the shop A (1) may be selected.
According to this embodiment, the selection condition for the ordering can be set in addition to the effect similar to that of the third embodiment. Moreover, the present embodiment can provide the effect that the ordering may be determined with reference to the product information.

Fifth Embodiment

In this embodiment, an example of support for purchasing in which a consumer purchases without ordering process will be described. Here, as the products which require the ordering, four batteries (size D), a package of toilet paper, and two bottles of milk (1000 ml) are assumed. The purchase is also assumed to be made at the supermarket A.
First, a display is controlled to display the information about the above products at the supermarket A as illustrated as 701 in Fig. 7.

(1) Battery (size D): Maker, product C, Price: ¥98, a set of two batteries, Ordering; 4 batteries = 2 sets = ¥196,
(2) Toilet paper: Maker D, Product name E, Price; ¥248, a set of 12 volumes; Ordering; One package = ¥248
(3) Milk (1000 ml): Maker F, Product name G, Price: ¥128/bott1e; Ordering; Two bottles = ¥256,

Moreover, a consumer desires purchase of pork for the supper and displays the information. For example, when the consumer clicks sequentially as follows, Food → Neat → Pork on the display 702, following data are displayed, for example as 801 as illustrated in Fig. 8.

(4) Sirloin (cut) of pork: ¥88/100g; number of orders ? (actually, number of purchase)

(5) Fillet (cut) of pork: ¥98/100g; number of orders? (actually, number of purchase)

Here, the consumer decides to purchase the Sirloin (4) of 200 g. Therefore, the consumer inputs 200g to the item (4) (part 802), selects (clicks 803 to 806) (1) to (4), and then clicks the shopping list 803. Accordingly, printing, transmission to a mobile telephone, entry to a file and display of menu are executed. Here, the consumer clicks transmission to the mobile telephone to transmit the shopping list to own mobile telephone.

When the consumer carrying the mobile telephone having received the shopping list visits the supermarket A, a shop guide diagram is displayed (901) on the mobile telephone as illustrated in Fig. 9 and the display areas 901 to 905 of the products (1) to (4) flicker. As illustrated in Fig. 10, the consumer executes display (1001) of the products to be purchased, then goes first to the battery area and faces the mobile telephone to the battery area. Here, the lamp provided at the rack of battery flickers. When the consumer takes out the wanted battery and brings the battery toward the mobile telephone, the product to be purchased is displayed. When the consumer put the battery into a cargo, the mark 1002 indicating the condition of already-purchased is given to the shopping list. Next, the consumer goes to the meat area to find out the fillet of pork as described above. Since it is displayed that the fillet is the product to be purchased when the consumer brings the mobile telephone toward the package of about 200g, the consumer checks the weight (although which is a little heavier) of fillet, takes out the meat of 210g and clicks the button 1003 indicating the condition of already-purchased. In this timing, the mobile telephone reads the RFID attached to the pack of pork and updates the column 1004 of the number of purchases to 210g and the column of price 1005 to ¥184. When the mark indicating the end of purchase is given to all products after continuation of such purchases, it means that the necessary purchases are all completed. At the payment area, all RFIDs of all products purchased are read, a list of the products purchased is easily displayed to complete the adjustment.

According to this embodiment, in addition to the effect similar to that of the three embodiments, a shopping list is created for making the purchase without ordering by a consumer to a supplier and the consumer carrying the mobile telephone which is storing the shopping list is capable of visiting the shops, the customer can easily find out the product display areas and can realize the accurate purchase of necessary products.

The present invention may be utilized to an inventory management and ordering and order acceptance management and purchase support system, moreover an order acceptance management system for the expendables including daily products and particularly foods, and moreover specifically to a residual quantity and inventory management and order acceptance management and purchase support system and moreover an order acceptance management system for the expendables utilizing the sensor network system.

## Claims

**1.** An inventory management and ordering system for executing management of residual quantity of products which changes with use thereof and inventory of products to always keep said products in the available condition, reflecting the residual quantity data of products obtained by said management of residual quantity on the management of inventory, and executing the ordering on the basis of said management of inventory on which said management of residual quantity is reflected.

**2.** The inventory management and ordering system according to claim 1, wherein said management of residual quantity and ordering of products is executed using a sensor network.

**3.** The inventory management and ordering system according to claim 2, wherein the sensor for monitoring of residual quantity is used for said management of residual quantity and said residual quantity data detected by said sensor for monitoring of residual quantity is reflected on said management of inventory via said sensor network.

**4.** The inventory management and ordering system according to claim 3, wherein said sensor for monitoring of residual quantity have the transceiver function for transmitting by radio said residual quantity data to the external side and said sensor network includes said sensor for monitoring of residual having said transceiver function as the node.

**5.** The inventory management and ordering system according to claim 4, wherein a power source of said sensor for monitoring of residual quantity having said transceiver function is supplied from an external power unit.

**6.** The inventory management and ordering system according to claim 4, wherein the power source of said sensor for monitoring of residual quantity having said transceiver function is supplied from a battery comprised within said sensor for monitoring of residual quantity.

**7.** The inventory management and ordering system according to claim 4, wherein said sensor for monitoring of residual quantity is provided with a power unit having the power generating function and the power source of said sensor for monitoring of residual quantity is supplied from said power unit having said power generating function.

**8.** The inventory management and ordering system according to claim 3, wherein an RFID is used for said management of inventory and ordering of said products is executed on the basis of said residual quantity data obtained through said sensor network and the inventory data obtained from said RFID.

**9.** The inventory management and ordering system according to claim 8, wherein said RFID has the transceiver function to transmit by radio, to the external side, the information indicating existence of said product which is the base of said inventory data and said sensor network includes said RFID having said transceiver function as the node.

**10.** The inventory management and ordering system according to claim 3, wherein a sensor for inventory management of said product is used and the ordering of said product is executed on the basis of said residual quantity data obtained through said sensor network and the inventory data obtained with said sensor for inventory management.

**11.** The inventory management and ordering system according to claim 10, wherein said sensor for inventory management has the transceiver function to transmit by radio said inventory data detected to the external side and said sensor network includes said sensor for inventory management having said transceiver function as the node.

**12.** The inventory management and ordering system according to claim 11, wherein the power source of said sensor for inventory management having said transceiver function is supplied from an external power unit.

**13.** The inventory management and ordering system according to claim 11, wherein the power source of said sensor for inventory management having said transceiver function is supplied with a battery built in said sensor for inventory management.

**14.** The inventory management and ordering system according to claim 11, wherein said sensor inventory management having said transceiver function is provided with a power unit including the power generating function and the power source of said sensor for inventory management is supplied from said power unit having the power generating function.

**15.** The inventory management and ordering system according to any of claims 1 to 14, wherein the place to use said product and detect residual quantity of said product is different from the place to store said product and execute management of said product.

**16.** An inventory management and ordering system for executing management of using conditions and inventory conditions of products using a sensor network and executing the ordering of said products on the basis of said using conditions and said inventory conditions, comprising:

a part of residual quantity measurement for measuring the using conditions of said products;

a part of inventory measurement for measuring the inventory conditions of said products;

a server for inventory management and ordering for acquiring the results of measurement of said part of residual quantity measurement and said part of inventory measurement for each product via said sensor network;

a part of decision of exchange or order for deciding the necessity of at least one of supplement to said product to said place to use, exchange of said product in said place to use and ordering of said product on the basis of the result of measurement of said using condition and said inventory condition acquired by said server for inventory management and ordering; and

a part of ordering process for executing at least one of the supplement, exchange, ordering and purchase support of said product on the basis of the result of decision by said part of decision of exchange or ordering.

**17.** The inventory management and ordering system according to claim 16, wherein said using condition of product is at least any of the residual quantity, degree of deterioration and time up to the consumption term in said place to use the product.

**18.** The inventory management and ordering system according to claim 16, wherein said inventory condition of product is an amount of inventory at said place to store the product.

**19.** The inventory management and ordering system according to claim 16, wherein said sensor network is formed with inclusion of base stations as the nodes and the results of measurement of said using conditions and said inventory conditions is transmitted and received via said base stations.

**20.** The inventory management and ordering system according to claim 16, wherein said server for inventory management and ordering is formed to be enable the communication with the base stations of said sensor network.

**21.** The inventory management and ordering system according to claim 16, wherein said part of decision of exchange or order is provided within the server for inventory management and ordering and said part of ordering process executes the ordering process on the basis of an instruction from said server for inventory management and ordering.

**22.** The inventory management and ordering system according to claim 16, wherein said part of residual quantity measurement measures, at the place to use the products or the place near to this place, at least one of the residual quantity, degree of deterioration of the products at the place to use, and the period up to the consumption term, using at least one of sensors having the transceiver function.

**23.** The inventory management and ordering system according to claim 16, wherein said part of inventory measurement measures executes measurement using at least one of sensors with the transceiver function provided at the place to store said product or at the place near to such storing place.

**24.** The inventory management and ordering system according to claim 16, wherein said part of inventory measurement executes measurement of the predetermined information of said product written in the RFID with the transceiver function attached to said product using at least one of the reader with the transceiver function and the sensor with the transceiver function provided at said place to store or at the place near to such storing place.

**25.** The inventory management and ordering system according to claim 16, wherein said part of inventory measurement selectively executes, for each of said products, any one of the measurement of the predetermined information of said product written into the RFID with the transceiver function attached to said product, using at least one sensor with the transceiver function provided at the place to store said product or at the place near to such storing place and the measurement thereof with any of the reader with the transceiver function and the sensor with the transceiver function provided at said place to store or at the place near to said storing place.

**26.** The inventory management and ordering system according to claim 16, wherein said server for inventory management and ordering is provided with a part of acquisition of measurement result and said part of acquisition of measurement result acquires the accurate residual quantity and inventory of products, for each product, from the result of measurement of the using conditions and inventory conditions of said product received through said sensor network by eliminating the duplicated measurement results in the particular measurement period of the same product, decides the necessity of notification of said obtained accurate residual quantity and inventory to a user from the predetermined reference, and also notifies such data to said user when the notification is decided to be necessary.

**27.** The inventory management and ordering system according to claim 26, wherein said part of acquisition of measurement result eliminates said duplicated measurement results in said respective particular measurement period for the inherent ID of said sensor when the measurement is executed using one or more sensors with transceiver function provided at the place to store said product or at the place near to said storing place, or for the ID added individually to said product when the predetermined information of said product written into the RFID with the transceiver function attached to said product is measured using the reader with the transceiver function or the sensor with the transceiver function provided at said place to store or at the place near to such storing place, and for the recognition of only one read operation when the same ID is read for a plurality of times.

**28.** The inventory management and ordering system according to claim 17, wherein said part of residual quantity measurement selectively executes, for said each product, any one of processes for disabling communication of the RFID when said product is set to the place to use under the condition that the RFID with the transceiver function is individually attached to said product, disabling communication of the RFID when the package of said product is opened under the condition that the RFID with the transceiver function is attached in units of packages in which one or two or more products are packed, or updating the predetermined data of the RFID so that the relevant product is not recognized as the inventory with the data writer when the use thereof is started without relation to the attaching method of the RFID of said product.

**29.** The inventory management and ordering system according to claim 16, wherein said part of decision of exchange or order decides necessity of supplement of said product to said place to use or exchange of product at said place to use by deciding supplement or exchange and then notifying the result to a user when the predetermined setting value of the residual quantity at the exchange period being stored in said server for inventory management and ordering is compared with the residual quantity of said product and the measured residual quantity becomes equal to or lower than said predetermined setting value, and deciding necessity of ordering and notifying it to the user when the predetermined setting value of the sum of the residual quantity and inventory in the ordering period being stored in said server for inventory management and ordering is compared with the sum of the residual quantity and inventory of said product and the sum of the residual quantity and inventory measured becomes equal to or lower than said predetermined setting value.

**30.** The inventory management and ordering system according to claim 29, wherein the process of decision of supplement of said product to the place to use or exchange thereof at the place to use is executed by using any of the predetermined setting value of each product or the setting value determined freely by a user as the setting value of the residual quantity in the exchange period being stored in said server for inventory management and ordering, while the process of decision of said necessity of ordering is executed by using nay of the predetermined setting value of each product or the setting value freely determined by a user as the setting value of the sum of the residual quantity and inventory in the ordering period being stored in said server for inventory management and ordering.

**31.** The inventory management and ordering system according to claim 30, wherein the process of decision of necessity of supplement of product to the place to use or exchange at the place to use is executed by using the predetermined setting value of the residual quantity in the exchange period being stored in said server for inventory management and ordering, residual quantity of said product and amount of use in unit of the particular time being stored in said server for inventory management and ordering to forecast the period in which the residual quantity becomes equal to or less than said predetermined setting value as the period in which the supplement or exchange is required and to notify the result of forecasting to a user.

**32.** The inventory management and ordering system according to claim 30, wherein the decision of necessity of ordering of product in the part of decision of exchange or order is executed by using the predetermined setting value of the sum of the residual quantity and inventory in the ordering period being stored to said server for inventory management and ordering, the sum of the residual quantity and inventory of said product and the amount of use in unit of particular time being stored to said server for inventory management and ordering in order to forecast, as the period in which the ordering is necessary, the period in which the sum of the residual quantity and inventory becomes equal to or less than said predetermined setting value and to notify the result of forecasting to a user.

**33.** The inventory management and ordering system according to claim 30, wherein decision of necessity of ordering of product in the part of decision of exchange or order is executed by using the sum of the residual quantity and inventory of said product and amount of use in unit of particular time in future being stored in said server for inventory management and ordering in order to forecast the period in which the sum of the residual quantity and inventory becomes zero and to notify the result of forecasting to a user.

**34.** The inventory management and ordering system according to any of claims 30 to 33, wherein the measurement result of inventory and residual quantity by said part of acquisition of measurement result, result of decision of necessity of exchange or ordering in said part of decision of exchange or order, result of measurement of period for necessity of exchange by said part of decision of exchange or order, result of forecasting of period for necessity of ordering by said part of decision of exchange or order and result of forecasting of period in which the sum of the residual quantity and inventory becomes zero by the part of decision of exchange or order are notified to a user when said server for inventory management and ordering satisfies the predetermined conditions for notification stored previously and when the user notifies a notification instruction to said server for inventory management and ordering without relation to said predetermined conditions or notification, and
the notification to said user is executed using at least any of the image and sound to any of a terminal connected to said server for inventory management and ordering and a terminal which can make communication with said server for inventory management and ordering.

**35.** The inventory management and ordering system according to claim 16, wherein the ordering destination of products by said part of ordering process is selectively determined to any of a predetermined supplier being stored in said server for inventory management and ordering, a supplier satisfying the predetermined conditions among a plurality of suppliers being stored in said server for inventory management and ordering, a supplier selected from the suppliers who have obtained the information of the predetermined products through the Internet in addition to the suppliers being stored in said server for inventory management and ordering, and
the ordering to the selected supplier is executed by selecting any of the ordering by said server for inventory management and ordering through the Internet, the ordering by a user from said server through the Internet on the basis of the predetermined product information obtained by said server for inventory management and ordering, the ordering by said server for inventory management and ordering or by the server in the side of the person in charge of acknowledgment after said server for inventory management and ordering asks for acknowledgment to the person in charge of acknowledgment and has obtained the acknowledgment, and the ordering by the server for inventory management and ordering through the Internet after said user asks for acknowledgment to the person in charge of acknowledgment and has obtained the acknowledgment, and
said user is capable of instructing stop of ordering of said product to said server for inventory management and ordering.

**36.** The inventory management and ordering system according to claim 35, wherein said selection of supplier is executed to satisfy the selecting conditions of said orderer on the basis of the evaluation result of the predetermined product information including at least any of the price, delivery date and service of said product.

**37.** The inventory management and ordering system according to claim 16, wherein said server for inventory management and ordering acquires, through the Internet, the predetermined product information of said product when a user purchases said product without ordering to the supplier and generates a shopping list recording the information including at least any one of the product name, price, and name of supplier of said product so that said user can print out such list via said server for inventory management and ordering, can receive the list with a mobile terminal or can input the list into a storage medium, and said part of ordering process can execute any of the processes, when said user makes the shopping using said mobile terminal storing said shopping list, that the product display area in the shop is notified to said user from said mobile terminal and that said product display area is notified to said user from a broadcaster which is provided in said product display area by controlling a receiver provided in the shop to receive said shopping list stored in said mobile terminal.

**38.** The inventory management and ordering system according to claim 16, wherein said part of residual quantity measurement is provided with a sensor for monitoring of residual quantity and said using conditions are detected with said sensor for monitoring of residual quantity.

**39.** The inventory management and ordering system according to claim 38, wherein said sensor for monitoring of residual quantity has the transceiver function for transmitting by radio said using conditions detected to the external side and said sensor network includes said sensor for monitoring of residual quantity having said transceiver function as the node.

**40.** The inventory management and ordering system according to claim 39, wherein the power source of said sensor for monitoring of residual quantity having said transceiver function is supplied from an external power source.

**41.** The inventory management and ordering system according to claim 39, wherein the power source of said sensor for monitoring of residual quantity having said transceiver function is supplied from a battery built in said sensor for monitoring of residual quantity.

**42.** The inventory management and ordering system according to claim 39, wherein said sensor for monitoring of residual quantity having said transceiver function is provided with a power unit having the power generating function and the power source of said sensor for monitoring of residual quantity is supplied from said power unit having the power generating function.

**43.** The inventory management and ordering system according to claim 16, wherein said part of inventory measurement is provided with an RFID reader to read the information from the RFID attached to said product and detect said inventory condition on the basis of said information.

**44.** The inventory management and ordering system according to claim 43, wherein said RFID is provided with the transceiver function for transmitting by radio the information indicating existence of said product forming said inventory data and said sensor network includes said RFID having said transceiver function as the node.

**45.** The inventory management and ordering system according to claim 16, wherein said part of inventory measurement is provided with a sensor for inventory management to detect said inventory conditions.

**46.** The inventory management and ordering system according to claim 45, wherein said sensor for inventory management has the transceiver function for transmitting by radio said inventory data to the external side and said sensor network includes said sensor for inventory management having said transceiver function as the node.

**47.** The inventory management and ordering system according to claim 46, wherein the power source of said sensor for inventory management having said transceiver function is supplied from an external power source.

**48.** The inventory management and ordering system according to claim 46, wherein the power source of said sensor for inventory management having said transceiver function is supplied from a battery built in said sensor for inventory management.

**49.** The inventory management and ordering system according to claim 46, wherein said sensor for inventory management having said transceiver function is provided with a power unit having the power generating function and the power source of said sensor for inventory management is supplied from said power unit having the power generating function.

**50.** An ordering management system comprising an inventory management and ordering sub-system for management of using conditions and inventory conditions of products using a sensor network for ordering of said products on the basis of said using conditions and inventory conditions and an order acceptance and forwarding management sub-system for accepting orders of said products ordered by said inventory management and ordering sub-system and for order acceptance and forwarding management for forwarding of said products to the orderer,

wherein said inventory management and ordering sub-system further comprises:

a part of residual quantity measurement for measuring the using conditions of said products;

a part of inventory measurement for measuring inventory conditions of said products;

a server for inventory management and ordering for acquiring, for each product, the results of measurement by said part of residual quantity measurement and said part of inventory measurement through said sensor net;

a part of decision of exchange or order for deciding at least any necessity among those of supplement of said products to said place to use, exchange of said products at said place to store, and ordering of said products on the basis of the results of measurement of said using conditions and said inventory conditions acquired by said server for inventory management and ordering; and

a part of ordering process for executing any of supplement, exchange, ordering, and purchase support of said products on the basis of the results of decision by said part of decision of exchange or order, and

wherein said ordering management sub-system further comprises:

a part of forecasting of order acceptance for storing for each orderer the order acceptance conditions in the past to a server for management of acceptance of order and forecasting for each orderer and each product the next order acceptance period and amount of order acceptance;

a part of offering product information for notifying, to said orderer, the product information related to the order acceptance products in the past and the present and future service conditions using said server for management of acceptance of order on the basis of the result of storage of said server for management of acceptance of order and the result of forecasting of said part of forecasting of acceptance of order;

a part of preparing inventory for acquiring inventory of products on the basis of the result of forecasting of said part of forecasting of order acceptance;

a part of accepting order for accepting orders of products by said server for management of acceptance of order from said orderers; and

a part of forwarding process for forwarding the order-accepted products to said orderers and sending a bill and then receiving the payment.

**51.** The ordering management system according to claim 50, wherein said part of residual quantity measurement is provided with a sensor for monitoring of residual quantity to detect said using conditions.

**52.** The ordering management system according to claim 51, wherein said sensor for monitoring of residual quantity has the transceiver function for transmitting by radio said using conditions to the external side and said sensor network includes said sensor for monitoring of residual quantity having said transceiver function as the node.

**53.** The ordering management system according to claim 52, wherein the power source of said sensor for monitoring of residual quantity having said transceiver function is supplied from an external power source.

**54.** The ordering management and ordering system according to claim 52, wherein the power source of said sensor for monitoring of residual quantity having said transceiver function is supplied from a battery built in said sensor for monitoring of residual quantity.

**55.** The ordering management system according to claim 52, wherein said sensor for monitoring of residual quantity having said transceiver function is provided with a power unit having the power generating function and the power source of said sensor for monitoring of residual quantity is supplied from said power unit having the power generating function.

**56.** The ordering management system according to claim 50, wherein said part of inventory measurement is provided with an RFID reader to read the information of an RFID attached to said product and detect said inventory conditions on the basis of said information.

**57.** The ordering management system according to claim 56, wherein said RFID has the transceiver function for transmitting by radio the information indicating existence of said product forming said inventory data and said sensor network includes said RFID having said transceiver function as the node.

**58.** The ordering management system according to claim 50, wherein said part of inventory measurement is provided with a sensor for inventory management to detect said inventory conditions.

**59.** The ordering management system according to claim 58, wherein said sensor for inventory management has the transceiver function for transmitting by radio said inventory data to the external side and said sensor network includes said sensor for inventory management having said transceiver function as the node.

**60.** The ordering management system according to claim 59, wherein the power source of said sensor for inventory management having said transceiver function is supplied from an external power source.

**61.** The ordering management system according to claim 59, wherein the power source of said sensor for inventory management having said transceiver function is supplied from a battery built in said sensor for inventory management.

**62.** The ordering management system according to claim 59, wherein said sensor for inventory management having said transceiver function is provided with a power unit having the power generating function and the power source of said sensor for inventory management is supplied from said power unit having the power generating function.

FIG. 1

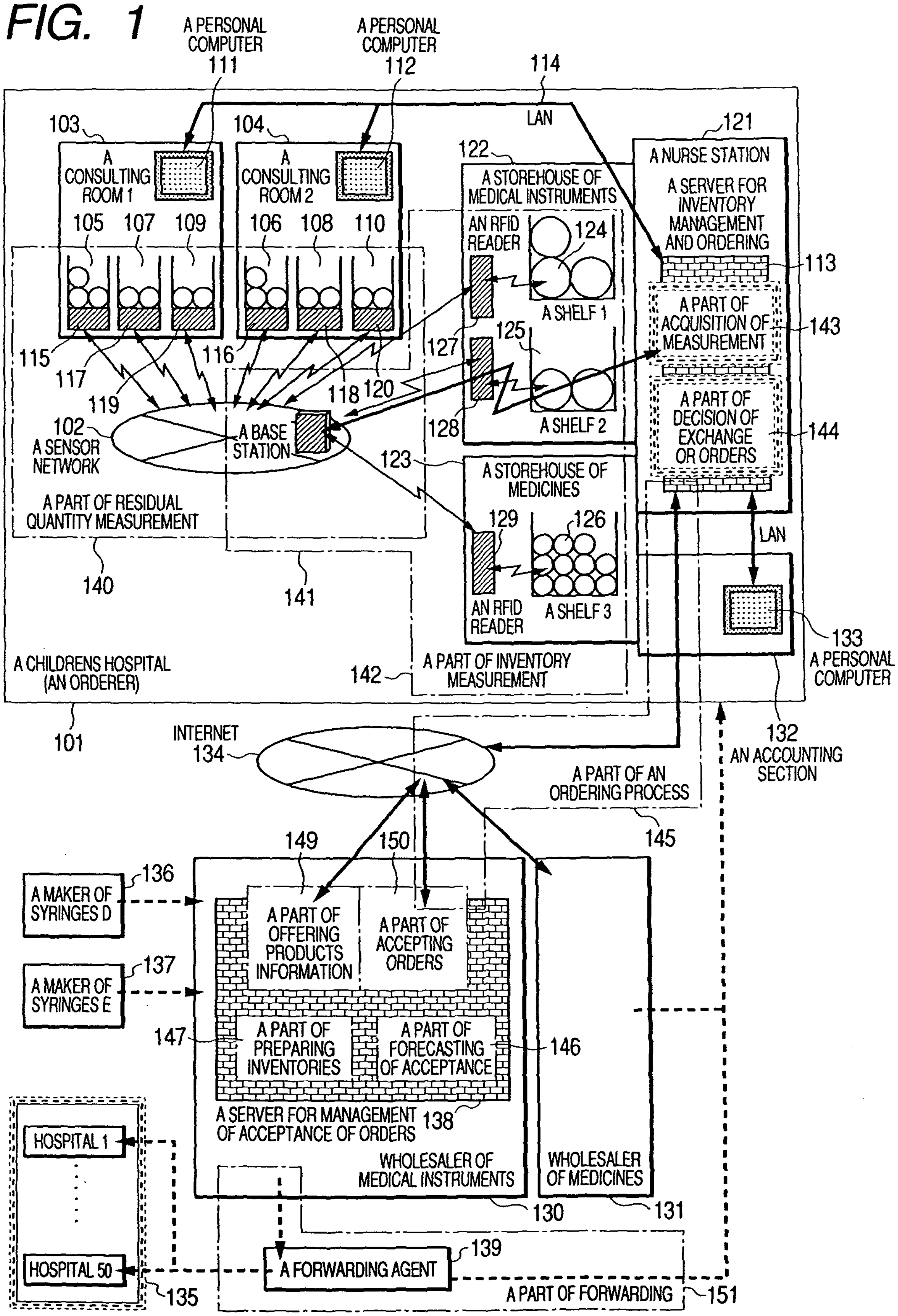
A PERSONAL COMPUTER 111
A PERSONAL COMPUTER 112
114 LAN
103 A CONSULTING ROOM 1
104 A CONSULTING ROOM 2
105 107 109
106 108 110
121 A NURSE STATION
A SERVER FOR INVENTORY MANAGEMENT AND ORDERING
113
122 A STOREHOUSE OF MEDICAL INSTRUMENTS
AN RFID READER
124
A SHELF 1
125
127
128
A SHELF 2
A PART OF ACQUISITION OF MEASUREMENT 143
A PART OF DECISION OF EXCHANGE OR ORDERS 144
115 116 117 118 119 120
102 A SENSOR NETWORK
A BASE STATION
123 A STOREHOUSE OF MEDICINES
129 126
AN RFID READER
A SHELF 3
LAN
A PART OF RESIDUAL QUANTITY MEASUREMENT
140
141
133 A PERSONAL COMPUTER
A CHILDRENS HOSPITAL (AN ORDERER)
142 A PART OF INVENTORY MEASUREMENT
101
INTERNET 134
132 AN ACCOUNTING SECTION
A PART OF AN ORDERING PROCESS
145
149 150
136 A MAKER OF SYRINGES D
137 A MAKER OF SYRINGES E
A PART OF OFFERING PRODUCTS INFORMATION
A PART OF ACCEPTING ORDERS
147 A PART OF PREPARING INVENTORIES
A PART OF FORECASTING OF ACCEPTANCE 146
A SERVER FOR MANAGEMENT OF ACCEPTANCE OF ORDERS 138
WHOLESALER OF MEDICAL INSTRUMENTS
WHOLESALER OF MEDICINES
130 131
HOSPITAL 1
HOSPITAL 50
135
139 A FORWARDING AGENT
A PART OF FORWARDING 151

FIG. 2

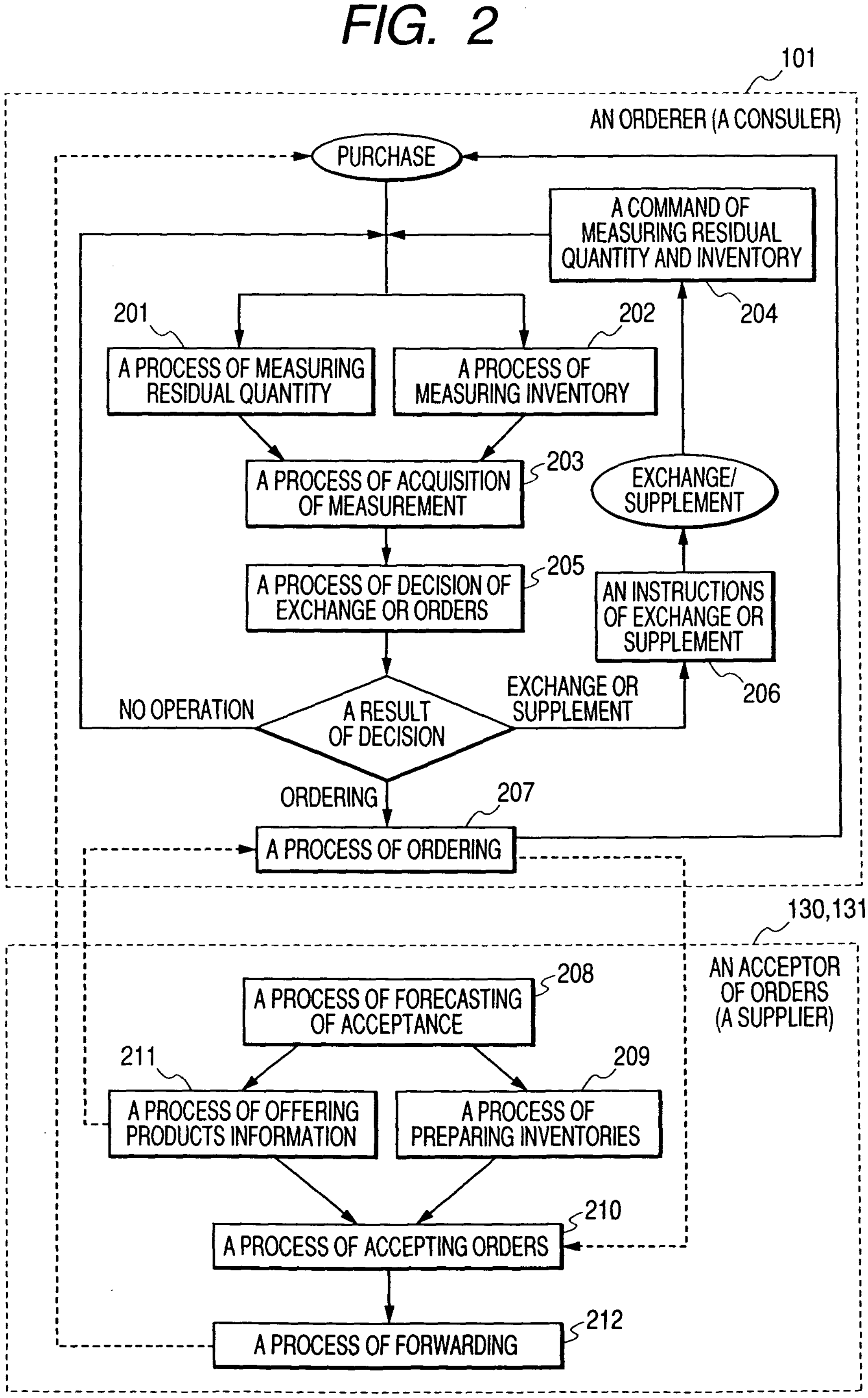
101
AN ORDERER (A CONSULER)
PURCHASE
A COMMAND OF MEASURING RESIDUAL QUANTITY AND INVENTORY
201
202
204
A PROCESS OF MEASURING RESIDUAL QUANTITY
A PROCESS OF MEASURING INVENTORY
203
A PROCESS OF ACQUISITION OF MEASUREMENT
EXCHANGE/ SUPPLEMENT
205
A PROCESS OF DECISION OF EXCHANGE OR ORDERS
AN INSTRUCTIONS OF EXCHANGE OR SUPPLEMENT
206
NO OPERATION
A RESULT OF DECISION
EXCHANGE OR SUPPLEMENT
ORDERING
207
A PROCESS OF ORDERING
130,131
AN ACCEPTOR OF ORDERS (A SUPPLIER)
208
A PROCESS OF FORECASTING OF ACCEPTANCE
211
209
A PROCESS OF OFFERING PRODUCTS INFORMATION
A PROCESS OF PREPARING INVENTORIES
210
A PROCESS OF ACCEPTING ORDERS
212
A PROCESS OF FORWARDING

FIG. 3

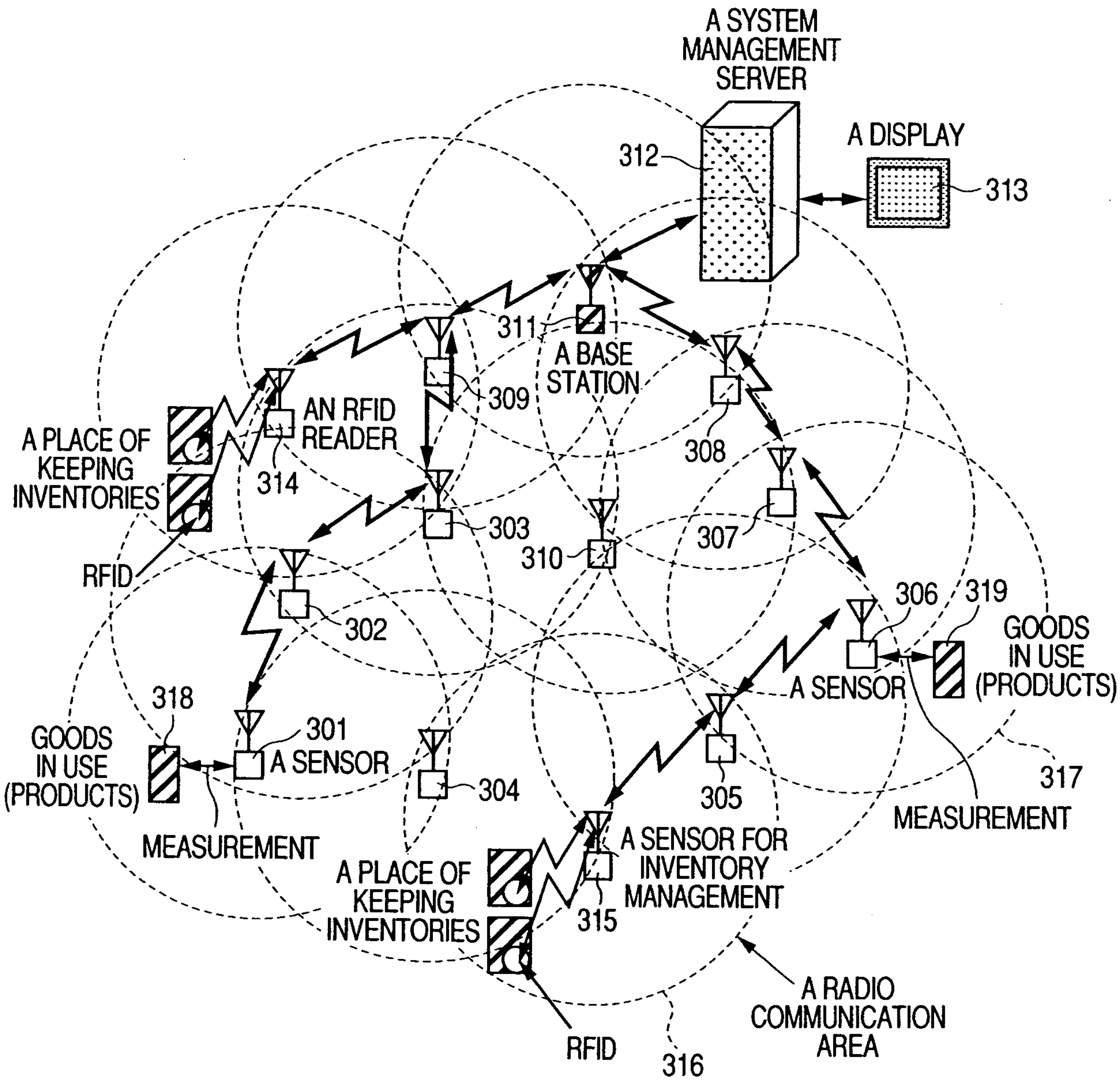
A SYSTEM MANAGEMENT SERVER
312
A DISPLAY
313
311
A BASE STATION
309
AN RFID READER
314
A PLACE OF KEEPING INVENTORIES
RFID
308
303
310
307
302
306
319
GOODS IN USE (PRODUCTS)
A SENSOR
317
318
GOODS IN USE (PRODUCTS)
301
A SENSOR
304
305
MEASUREMENT
MEASUREMENT
A PLACE OF KEEPING INVENTORIES
A SENSOR FOR INVENTORY MANAGEMENT
315
A RADIO COMMUNICATION AREA
RFID
316

FIG. 4A

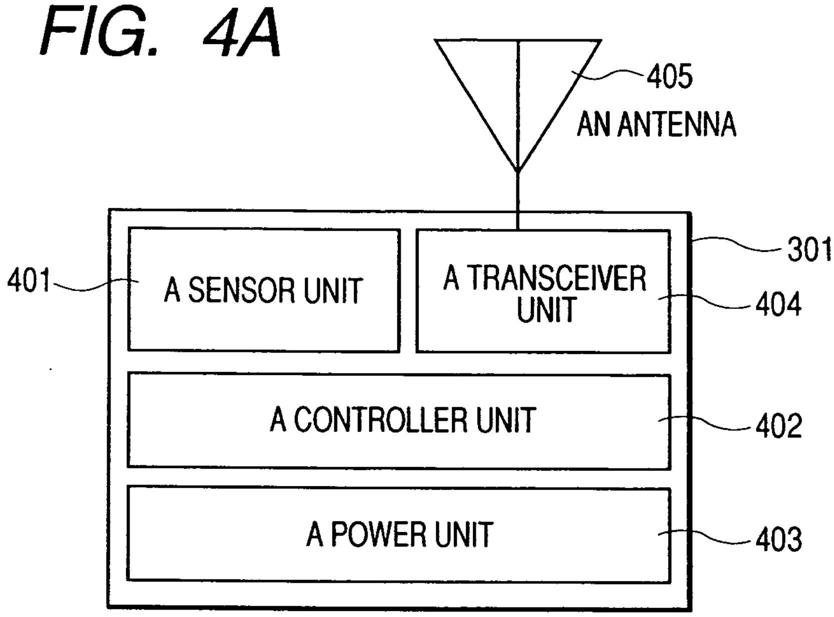


A SENSOR NODE

FIG. 4B

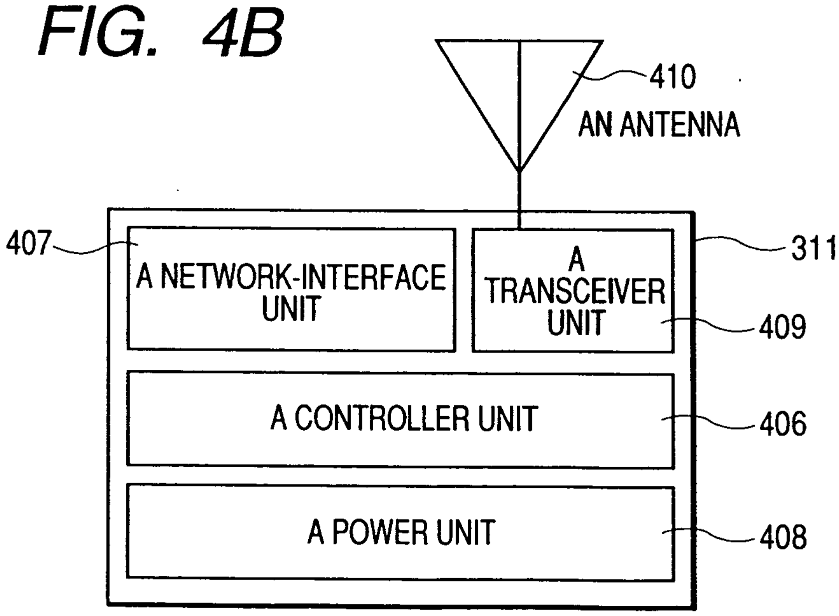


A BASE STATION

FIG. 5

RESIDUAL QUANTITIES AND INVENTORIES OF EXPENDABLES

501

| No. | EXPENDABLES | RESIDUAL QUANTITIES | | | | INVENTORIES | SUMS | NECESSITY OF ORDERING |
|---|---|---|---|---|---|---|---|---|
| | | A CONSULTING ROOM 1 | NECESSITY OF SUPPLEMENT | A CONSULTING ROOM 2 | NECESSITY OF SUPPLEMENT | | | |
| 1 | SYRINGES | 10 | — | 6 | — | 300 [15pkg] | 316 | — |
| 2 | BANDAGE | 50m | — | 70m | — | 4,400m [11pkg] | 4,520m | — |
| 3 | ALCOHOL FOR STERILIZATION | 300cc | — | 400cc | — | 6,000cc | 6,700cc | — |

# FIG. 6

FORECASTED TIME: SUPPLEMENT/EXCHANGE, ORDER, 0 INVENTORIES

601

| No. | EXPENDABLES | NECESSITY OF SUPPLEMENT | | NECESSITY OF ORDERING | ORDER | 0 INVENTORIES | PROCESS | |
|---|---|---|---|---|---|---|---|---|
| | | A CONSULTING ROOM 1 | A CONSULTING ROOM 2 | | | | ORDER (CLICK) | APPROVAL (CLICK) |
| 1 | SYRINGES | ○ | ○ | ○ | 2003 10/10 | 2003 10/15 | | |
| 2 | BANDAGE | ○ | ○ | — | 2003 10/11 | 2003 10/18 | | |
| 3 | ALCOHOL FOR STERILIZATION | ○ | ○ | — | 2003 10/12 | 2003 10/15 | | |

FIG. 7

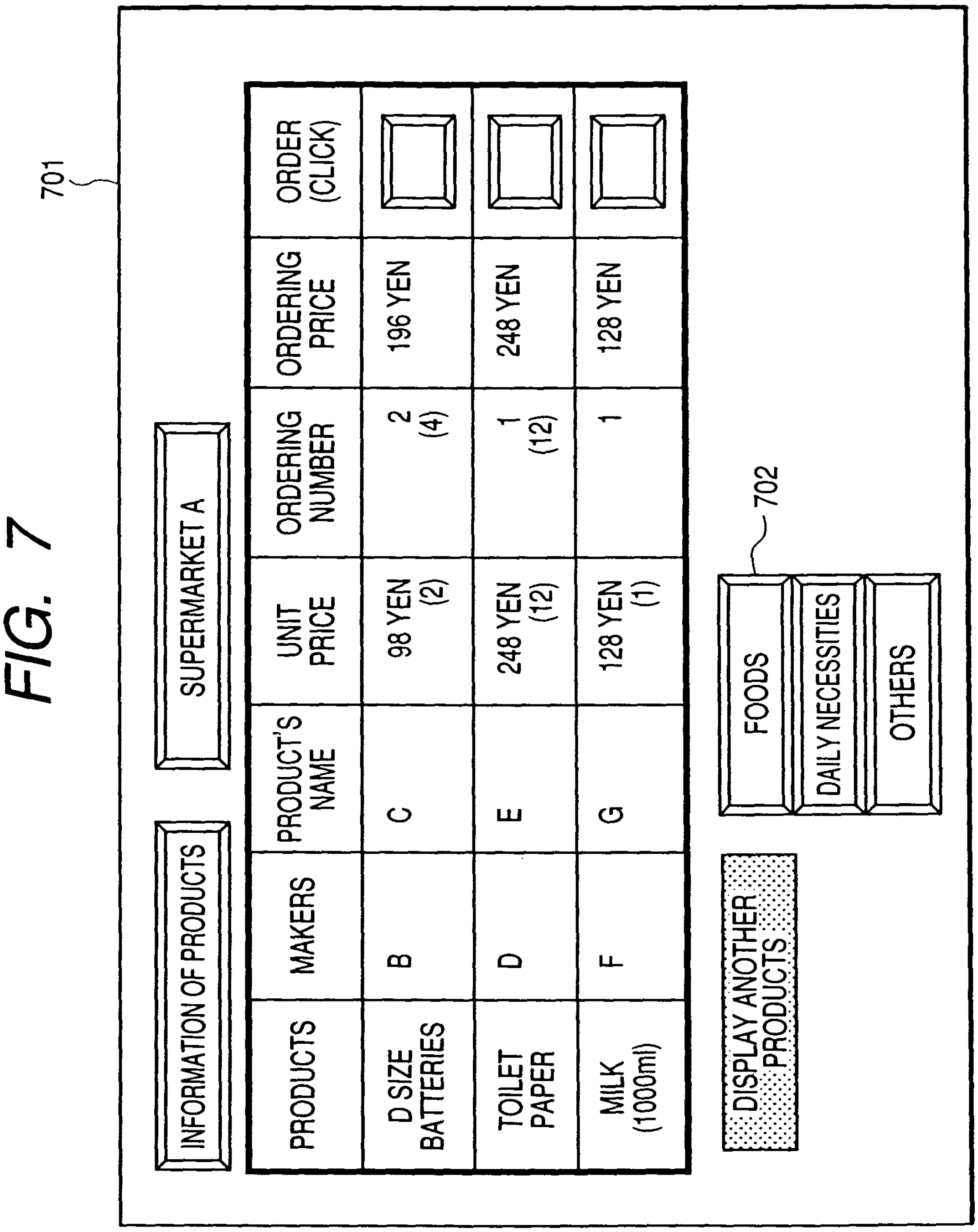
701
INFORMATION OF PRODUCTS
SUPERMARKET A
PRODUCTS
MAKERS
PRODUCT'S NAME
UNIT PRICE
ORDERING NUMBER
ORDERING PRICE
ORDER (CLICK)
D SIZE BATTERIES
B
C
98 YEN (2)
2 (4)
196 YEN
TOILET PAPER
D
E
248 YEN (12)
1 (12)
248 YEN
MILK (1000ml)
F
G
128 YEN (1)
1
128 YEN
DISPLAY ANOTHER PRODUCTS
702
FOODS
DAILY NECESSITIES
OTHERS

FIG. 8

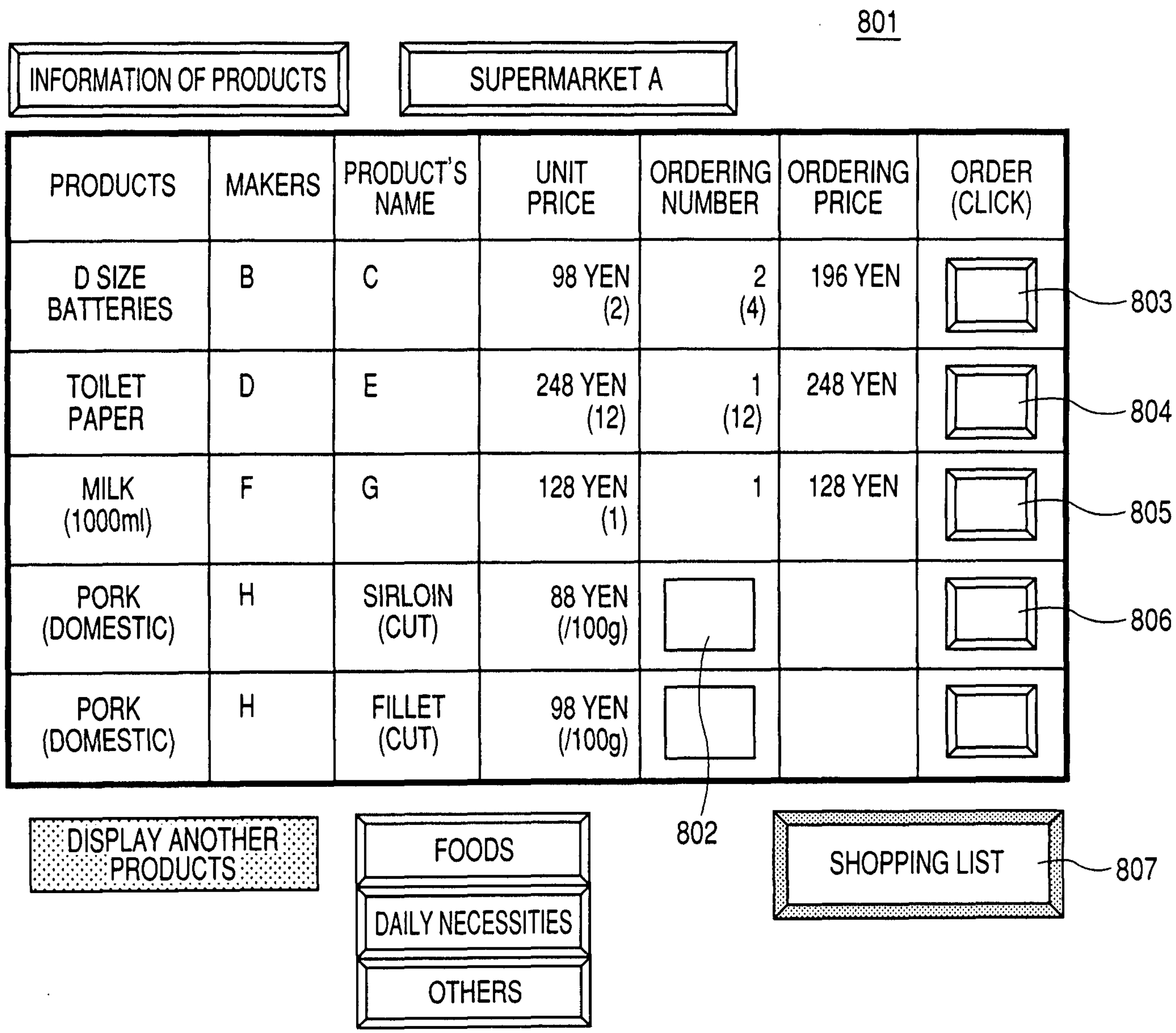
801
INFORMATION OF PRODUCTS
SUPERMARKET A
PRODUCTS
MAKERS
PRODUCT'S NAME
UNIT PRICE
ORDERING NUMBER
ORDERING PRICE
ORDER (CLICK)
D SIZE BATTERIES
B
C
98 YEN (2)
2 (4)
196 YEN
803
TOILET PAPER
D
E
248 YEN (12)
1 (12)
248 YEN
804
MILK (1000ml)
F
G
128 YEN (1)
1
128 YEN
805
PORK (DOMESTIC)
H
SIRLOIN (CUT)
88 YEN (/100g)
806
PORK (DOMESTIC)
H
FILLET (CUT)
98 YEN (/100g)
802
DISPLAY ANOTHER PRODUCTS
FOODS
DAILY NECESSITIES
OTHERS
SHOPPING LIST
807

FIG. 9

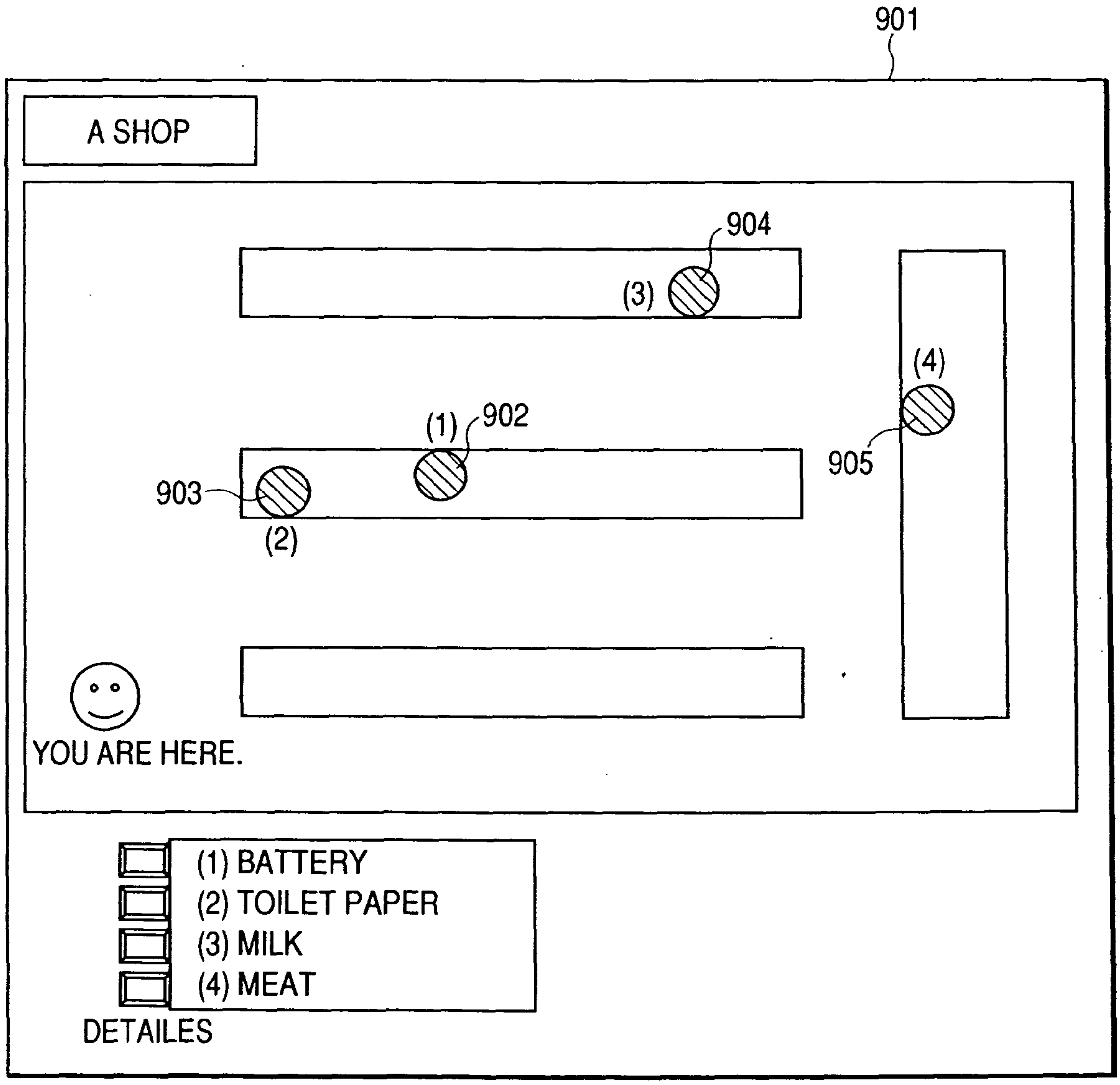
901
A SHOP
904
(3)
(4)
(1)
902
905
903
(2)
YOU ARE HERE.
(1) BATTERY
(2) TOILET PAPER
(3) MILK
(4) MEAT
DETAILES

# FIG. 10

1001

| PRODUCTS | MAKERS | PRODUCT'S NAME | UNIT PRICE | PURCHASE NUMBERS | PURCHASE PRICE | ALREADY PURCHASED |
|---|---|---|---|---|---|---|
| D SIZE BATTERIES | B | C | 98 YEN (2) | 2 (4) | 196 YEN | 1002 |
| TOILET PAPER | D | E | 248 YEN (12) | 1 (12) | 248 YEN | |
| MILK (1000ml) | F | G | 128 YEN (1) | 1 | 128 YEN | |
| PORK (DOMESTIC) | H | SIRLOIN (CUT) | 88 YEN (/100g) | 200g 1004 | 176 YEN 1005 | 1003 |